# EUROPEAN PATENT SPECIFICATION

(11) **EP 2 832 805 B1**
(45) Date of publication and mention of the grant of the patent: **07.09.2016**
(21) Application number: 13770241.1
(22) Date of filing: 28.02.2013
(51) Int. Cl.: B41J 2/01, B41M 5/00, C09D 11/101, C09D 11/38, B41M 7/00, C09D 11/322

(54) **INKJET INK COMPOSITION, INKJET RECORDING METHOD, AND PRINTED MATTER**
TINTENSTRAHLTINTENZUSAMMENSETZUNG, TINTENSTRAHLAUFZEICHNUNGSVERFAHREN UND BEDRUCKTES MATERIAL
COMPOSITION D'ENCRE POUR JET D'ENCRE, PROCÉDÉ D'ENREGISTREMENT PAR JET D'ENCRE ET MATIÈRE IMPRIMÉE

(30) Priority: 30.03.2012 JP 2012080646
(43) Date of publication of application: 04.02.2015
(73) Proprietor: FUJIFILM Corporation, Tokyo 106-8620 (JP)
(72) Inventor: HAYATA Yuuichi, Ashigarakami-gun Kanagawa 258-8577 (JP)
(74) Representative: Höhfeld, Jochen
(86) International application number: PCT/JP2013/055343
(87) International publication number: WO 2013/146062

(56) References cited:
- EP-A1- 2 053 103
- EP-A1- 2 302 007
- WO-A1-2007/017298
- WO-A1-2009/060235
- JP-A- 2005 505 615
- JP-A- 2007 204 543
- JP-A- 2009 503 209
- JP-A- 2011 068 783
- US-A1- 2006 158 492

## Description

### BACKGROUND OF THE INVENTION

### 1. Field of the Invention

The present invention relates to an ink-jet ink composition, an inkjet recording method, and a printed matter.

### 2. Description of the Related Art

As an image recording method by which an image is formed on a recording medium such as paper based on image data signals, there is an electrophotographic method, a sublimation-type and fusion-type thermal transfer method, an inkjet method, or the like.

In the inkjet method, an inexpensive printer is used, and a plate is not required for printing. Moreover, in this method, an image is directly formed on a recording medium by ejecting an ink composition only to a required image portion. Accordingly, the ink composition can be used with high efficiency, and particularly in a case of small-lot production, the running cost is lowered. Furthermore, the inkjet method makes small noise. Therefore, the inkjet method is excellent as an image recording method and has drawn attention recently.

Particularly, an ink composition for inkjet recording that can be cured by irradiation of radiation such as ultraviolet rays (radiation-curable ink composition for inkjet recording) has a property in which most of the components of the ink composition are cured by irradiation of radiation such as ultraviolet rays. Therefore, compared to a solvent-based ink composition, such an ink composition is dried excellently and hardly causes blurring of an image. Accordingly, the ink composition is excellent since it can be printed on various recording media.

Examples of conventional ink compositions for inkjet recording include those disclosed in JP2011-502188A, JP2011-500932A, US2010/330296A, JP2007-204543A, and JP2009-46605A.

### SUMMARY OF THE INVENTION

An object of the present invention is to provide an ink-jet ink composition, which reduces a migration of components contained in a film that are eluted to the outside, does not easily cause shrinking of a printed matter, suppresses odor of a printed matter, and exhibits excellent curability and blocking resistance, and an inkjet recording method and a printed matter that use the ink-jet ink composition.

The object of the present invention is achieved by an ink-jet ink composition, an inkjet recording method, and a printed matter according to the following <1>, <11>, and <12>. Moreover, preferable embodiments are also described in the following <2> to <10>.
<1> An inkjet composition containing (Component A) a polyfunctional (meth)acrylate compound, (Component B) 1-[4-(4-benzoylphenylsulfanyl)phenyl]-2-methyl-2-(4-methylphenylsulfonyl)propan-1-one, and (Component C) a compound represented by the following Formula (1) or Formula (2), in which a content of polymerization initiator having a molecular weight of less than 340 is equal to or smaller than 1.0% by mass with respect to a total amount of the ink composition. 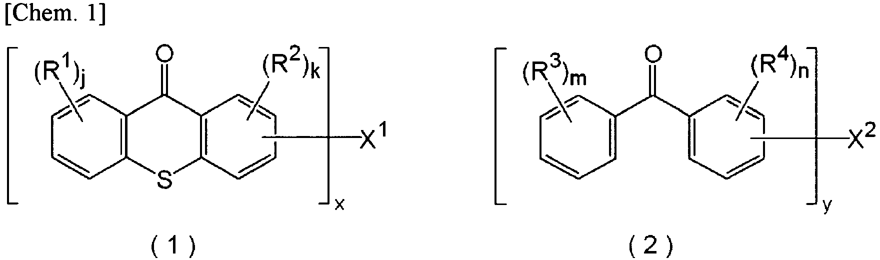
   (In Formula (1) and Formula (2), each of R¹, R², R³, and R⁴ independently represents an alkyl group having 1 to 5 carbon atoms or represents a halogen atom; each of x and y independently represents an integer from 2 to 4; each of j and m independently represents an integer from 0 to 4; each of k and n independently represents an integer from 0 to 3; when j, k, m, and n are an integer of equal to or greater than 2, plural R¹s, R²s, R³ₛ, and R⁴s may be the same as or different from each other; X¹ represents an x-valent linking group containing at least one of the hydrocarbon chain, ether bond, and ester bond; and X² represents a y-valent linking group containing at least one of the hydrocarbon chain, ether bond, and ester bond.)
<2> The ink-jet ink composition according to <1>, containing the compound represented by Formula (1) and the compound represented by Formula (2).
<3> The ink-jet ink composition according to <1> or <2>, in which the Component A includes a bifunctional acrylate monomer.
<4> The ink-jet ink composition according to <3>, containing at least one kind of bifunctional acrylate monomer in an amount of 20% by mass to 80% by mass with respect to a total amount of the ink composition.
<5> The ink-jet ink composition according to any one of <1> to <4>, in which the compound represented by Formula (1) is a compound represented by Formula (1'), and the compound represented by Formula (2) is a compound represented by Formula (2'). 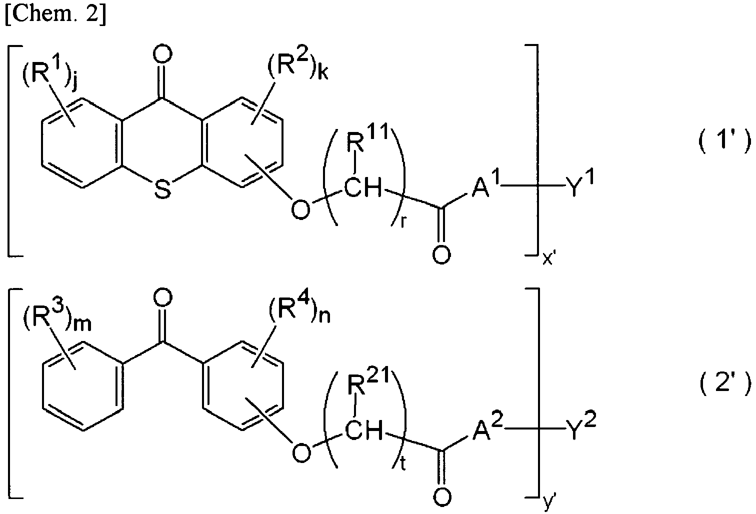
   (In Formula (1'), R¹, R², j, and k have the same definition as R¹, R², j, and k in Formula (1) respectively; each R¹¹ independently represents a hydrogen atom or an alkyl group having 1 to 4 carbon atoms; each r independently represents an integer from 1 to 6; x' represents an integer from 2 to 4; Y¹ represents a residue which is formed when hydrogen atoms of at least two hydroxy groups are removed from a polyhydroxy compound having 2 to 4 hydroxy groups; A¹ represents at least one group selected from a group consisting of the following (i) to (iii); R³, R⁴, m, and n in Formula (2') have the same definition as R³, R⁴, m, and n in Formula (2) respectively; each R²¹ independently represents an hydrogen atom or an alkyl group having 1 to 4 carbon atoms; each t independently represents an integer from 1 to 6; y' represents an integer from 2 to 4; Y² represents a residue which is formed when hydrogen atoms of at least two hydroxy groups are removed from a polyhydroxy compound having 2 to 4 hydroxy groups; and A² represents at least one group selected from a group consisting of the following (i) to (iii).) [Chem. 3]

   ∗-[O(CHR¹²CHR¹³)ₐ]_{d}-∗∗ (i)

   ∗-[O(CH₂)_{b}CO]_{d}-∗∗ (ii)

   ∗-[O(CH₂)_{b}CO]_{(d-1)}-[O(CHR¹²CHR¹³)ₐ]- ** (iii)

   (In Formula (i) to Formula (iii), one of R¹² and R¹³ represents a hydrogen atom, and the other represents a hydrogen atom, a methyl group, or an ethyl group; a represents an integer of 1 or 2; b represents an integer of 4 or 5; d represents an integer from 1 to 20; * represents a binding site at which (i) to (iii) bind to a carbonyl carbon; and ** represents a binding site at which (i) to (iii) bind to Y¹ or Y².)
<6> The ink-jet ink composition according to any one of <1> to <5>, further containing isopropylthioxanthone.
<7> The ink-jet ink composition according to any one of <1> to <6>, in which a content of the Component B is 0.3% by mass to 5.0% by mass with respect to a total mass of the ink composition.
<8> The ink-jet ink composition according to any one of <1> to <7>, in which a mass ratio between a content of the Component B and a total content of the Component C ((Content of Component B):(Total content of Component C)) is 2:1 to 1:15.
<9> The ink-jet ink composition according to any one of <1> to <8>, in which a content of the Component A is equal to or greater than 80% by mass with respect to a total mass of the ink composition.
<10> The ink-jet ink composition according to any one of <1> to <9> that is for package printing.
<11> An inkjet recording method including (Step a) printing the ink-jet ink composition according to any one of <1> to <10> on a support for a package having a film thickness of equal to or smaller than 150 µm by ejecting the ink-jet ink composition from an inkjet head, and (Step b) irradiating the ejected ink-jet ink composition with actinic rays, in this order.
<12> A printed matter produced by the inkj et recording method according to <11>.

According to the present invention, it is possible to provide an ink-jet ink composition, which reduces a migration of components contained in a film that are eluted to the outside, does not easily cause shrinking of a printed matter, suppresses odor of the printed matter, and exhibits excellent curability and blocking resistance, and an inkjet recording method and a printed matter that use the ink-jet ink composition.

### DESCRIPTION OF THE PREFERRED EMBODIMENTS

Hereinafter, the present invention will be described in detail.

In the present specification, a portion described as "xx to yy" means a range of numerical values including xx and yy. Moreover, "(Component A) a polyfunctional (meth)acrylate compound" and the like are also referred to as "Component A" and the like.

"(Meth)acrylate" and the like have the same definition as "acrylate and/or methacrylate"and the like, and the same shall be applied to the following description.

Furthermore, in the present invention, "% by mass" has the same definition as "% by weight", and "part by mass" has the same definition as "part by weight".

Hereinafter, the present invention will be described in detail.

### (Ink-jet Ink Composition)

The ink-jet ink composition (hereinafter, also simply referred to as "ink composition") of the present invention contains (Component A) a polyfunctional (meth)acrylate compound, (Component B) 1-[4-(4-benzoylphenylsulfanyl)phenyl]-2-methyl-2-(4-methylphenylsulfonyl)propan-1-one, and (Component C) a compound represented by the following Formula (1) or Formula (2), in which a content of polymerization initiator having a molecular weight of less than 340 is equal to or smaller than 1.0% by mass with respect to a total amount of the ink composition.

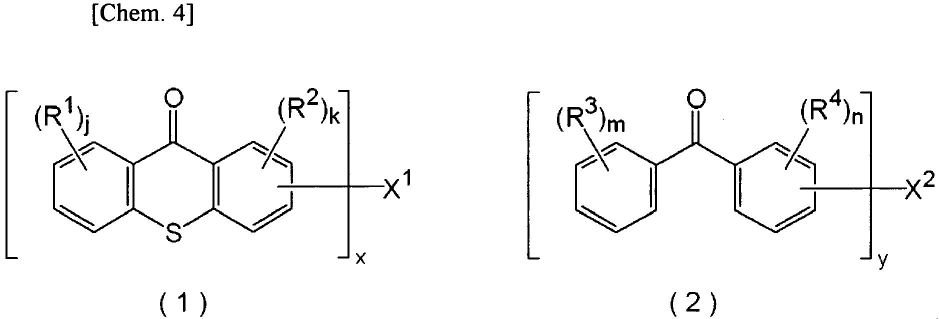

(In Formula (1) and Formula (2), each of R1, R2, R3, and R4 independently represents an alkyl group having 1 to 5 carbon atoms or represents a halogen atom; each of x and y independently represents an integer from 2 to 4; each of j and m independently represents an integer from 0 to 4; each of k and n independently represents an integer from 0 to 3; when j, k, m, and n are an integer of equal to or greater than 2, plural R¹s, R²s, R³ₛ, and R⁴s may be the same as or different from each other; X¹ represents an x-valent linking group containing at least one of the hydrocarbon chain, ether bond, and ester bond; and X² represents a y-valent linking group containing at least one of the hydrocarbon chain, ether bond, and ester bond.)

The ink composition of the present invention is an oleaginous ink composition that can be cured by actinic rays. The "actinic rays" mean radiation which can supply energy that can generate initiating species in the ink composition by the radiation irradiation. The actinic rays include α-rays, γ-rays, X-rays, ultraviolet rays, visible rays, electron beams, and the like. Among these, from the viewpoint of curing sensitivity and easy availability of an apparatus, ultraviolet rays and electron beams are preferable, and ultraviolet rays are more preferable.

Moreover, the ink composition of the present invention is an actinic radiation-curable ink composition and is different from an aqueous ink composition or a solvent ink composition. It is preferable for the ink composition of the present invention not to contain water and a volatile solvent as far as possible. Even when the ink composition contains water and a volatile solvent, the amount is preferably equal to or smaller than 1% by mass, more preferably equal to or smaller than 0.5% by mass, and even more preferably equal to or smaller than 0.1% by mass, with respect to a total mass of the ink composition.

Furthermore, the ink-jet ink composition of the present invention can be preferably used as an ink-jet ink composition for package printing.

A printed matter, which is obtained by the conventional actinic ray-curing type inkjet printing, has a problem in that an unreacted monomer, a polymerization initiator, residues of the polymerization initiator, and the like migrate from the cured film. Particularly, when the conventional actinic ray-curing type inkjet printing is used for package printing for food packaging and the like, there is a problem in that a large amount of the composition is transferred to the content of the package, that is, a large amount of the composition migrates (is eluted or transferred) to the content. In addition, there are also problems in that the cured film has strong odor, and the odor is transferred to the content or surrounding foods.

Furthermore, the actinic ray-curing type inkjet printing also has a problem in that a portion of printed matter easily shrinks at the time of curing. Particularly, when printing is performed on a relatively thin (for example, 10 µm to 50 µm) recording medium (support) for food packaging, the problem of shrinking markedly arises.

Moreover, there is a demand for a high degree of curing sensitivity appropriate for high productivity required for package printing.

The ink-jet ink composition of the present invention adopts the aforementioned constitution. Therefore, the present invention can provide an ink-jet ink composition which reduces a migration of components contained in a film that are eluted to the outside, does not easily cause shrinking of a printed matter, suppresses odor of the printed matter, and exhibits excellent curability and blocking resistance.

In addition, the present inventors assume that since the ink-jet ink composition contains the Component A to Component C, a crosslinked structure may be formed in the cured film, and accordingly, migration may be suppressed, although a detailed mechanism thereof is unclear. They also consider that since the Component B and the Component C are polymerization initiators having a high molecular weight, and accordingly, the polymerization initiator may not easily move into the film and may not be easily volatilized. Moreover, they consider that by concurrently using a specific combination of the Component B and the Component C as a polymerization initiator, excellent curability may be obtained, and as a result, a molecular weight of the polymer in the generated cured film may become high, a crosslinking rate of the Component A may be increased, and residues such as a decomposition product of the Component B and the Component C remaining in the film and monomers may not be easily eluted out of the film. The present inventors assume that consequentially, migration and odor from the cured film and blocking may be inhibited. Moreover, they also found that by concurrently using a polymerization initiator in a specific combination of the Component B and the Component C, high sensitivity is obtained.

Hereinafter, the ink composition of the present invention will be described in detail.

### (Component A) Polyfunctional (Meth)acrylate Compound

The ink composition of the present invention contains (Component A) a polyfunctional (meth)acrylate compound. Due to the Component A contained in the ink composition, a crosslinked structure is formed in the cured film, and migration is suppressed.

Moreover, in the present invention, in some cases, "(meth)acrylate" indicates either or both the "acrylate" and "methacrylate", and "(meth)acryl" indicates either or both the "acryl" and "methacryl".

Examples of the Component A include (Component A-1) a polyfunctional (meth)acrylate monomer and (Component A-2) a polyfunctional (meth)acrylate oligomer. That is, the (Component A) polyfunctional (meth)acrylate compound is preferably the (Component A-1) polyfunctional (meth)acrylate and/or the (Component A-2) polyfunctional (meth)acrylate oligomer.

One kind of the above components may be used singly, or two or more kinds thereof may be used concurrently. Moreover, two or more kinds of the Component A-1 may be used, or each of the Component A-1 and Component A-2 may be used singly. Alternatively, two or more kinds of the Component A-1 and/or Component A-2 may be used concurrently, but there is no limitation on how to use the components.

Furthermore, the Component A is preferably a polyfunctional acrylate compound.

A total content of the Component A is preferably 20% by mass to 98% by mass with respect to a total amount of the ink composition. From the viewpoint of suppressing migration and odor and from the viewpoint of reactivity, when the Component A is constituted with the Component A-1 and the Component A-2, a total content of the Component A including Component A-1 and the Component A-2 is preferably 20% by mass to 98% by mass, more preferably 50% by mass to 97% by mass, even more preferably 70% by mass to 96% by mass, and particularly preferably 80% by mass to 95% by mass, with respect to a total amount of the ink composition.

### (Component A-1) Polyfunctional (Meth)acrylate Monomer

In the present invention, a polyfunctional (meth)acrylate monomer refers to a compound which has two or more (meth)acryloyloxy groups in a molecule and has a molecular weight of less than 1,000.

In the present invention, the molecular weight of the polyfunctional (meth)acrylate monomer is preferably equal to or smaller than 700, more preferably equal to or smaller than 500, even more preferably 226 to 358, and particularly preferably 242 to 300. If the molecular weight is within the above range, suppression of migration and odor of a printed matter and reactivity can be established at the same time.

The polyfunctional (meth)acrylate monomer preferably has 2 to 6 functional groups, more preferably has 2 to 4 functional groups, even more preferably has 2 or 3 functional groups, and particularly preferably has 2 functional groups.

As the polyfunctional (meth)acrylate monomer, from the viewpoint of reactivity and odor, a (meth)acrylate monomer having 2 or more functional groups that has a hydrocarbon chain having 5 or more carbon atoms in a molecule or a (meth)acrylate monomer having 2 or more functional groups that has a propylene oxide chain or a tetraethylene glycol chain in a molecule is preferable; a bifunctional (meth)acrylate monomer that has a hydrocarbon chain having 5 or more carbon atoms in a molecule or a bifunctional (meth)acrylate monomer that has a propylene oxide chain or a tetraethylene glycol chain in a molecule is more preferable; and a bifunctional (meth)acrylate monomer that has a hydrocarbon chain having 5 or more carbon atoms in a molecule is even more preferable.

Specific examples of monomers preferable as the polyfunctional (meth)acrylate monomer include dipropylene glycol (meth)acrylate, tripropylene glycol (meth)acrylate, tetraethylene glycol di(meth)acrylate, neopentyl glycol di(meth)acrylate, propylene oxide (PO)-modified neopnetyl glycol di(meth)acrylate, 3-methylpentanediol di(meth)acrylate, hexanediol di(meth)acrylate, ethylene oxide (EO)-modified hexanediol di(meth)acrylate, PO-modified hexanediol di(meth)acrylate, heptanediol di(meth)acrylate, octanediol di(meth)acrylate, nonanediol di(meth)acrylate, decanediol di(meth)acrylate, and dodecanediol di(meth)acrylate.

Among these, tripropylene glycol diacrylate, neopentyl glycol diacrylate, PO-modified neopentyl glycol diacrylate, 3-methyl-1,5-pentanediol diacrylate, nonanediol diacrylate, decanediol diacrylate, and dodecanediol diacrylate are more preferable.

Examples of the (meth)acrylate compound having 3 or more functional groups include pentaerythritol tri(meth)acrylate, pentaerythritol tetra(meth)acrylate, dipentaerythritol tetra(meth)acrylate, trimethylolethane tri(meth)acrylate, trimethylolpropane tri(meth)acrylate, tetramethylolmethane tetra(meth)acrylate, and oligoester (meth)acrylate.

The hydrocarbon chain having 5 or more carbon atoms may be linear or branched.

Furthermore, the hydrocarbon chain having 5 or more carbon atoms is preferably a hydrocarbon chain having 5 to 12 carbon atoms, more preferably a linear or branched alkylene group having 5 to 12 carbon atoms, and even more preferably a linear or branched alkylene group having 5 to 8 carbon atoms.

In the present invention, from the viewpoint of maintaining the ink viscosity at a low level, it is preferable for the polyfunctional (meth)acrylate monomer to be a monomer which has a linear or branched alkylene group but does not have a cyclic structure.

From the viewpoint of maintaining the ink viscosity at a low level, viscosity at 25°C of the polyfunctional (meth)acrylate monomer itself is preferably 3 mPa·sec to 20 mPa·sec, and more preferably 6 mPa·sec to 15 mPa·sec.

In the present invention, from the viewpoint of forming a crosslinked structure in the cured film, suppressing migration, odor, blocking, and shrinking of a printed matter, and maintaining viscosity of the ink composition at a low level appropriate for inkjet, it is preferable to use a bifunctional acrylate monomer as the polyfunctional (meth)acrylate monomer.

It is more preferable for the viscosity at 25°C of the bifunctional (meth)acrylate monomer to fall within the aforementioned range. Particularly, it is preferable for the viscosity at 25°C of the bifunctional acrylate monomer to fall within the aforementioned range.

Furthermore, the ink composition of the present invention contains at least one kind of bifunctional acrylate monomer, preferably in an amount of 20% by mass to 80% by mass, more preferably in an amount of 30% by mass to 75% by mass, and even more preferably in an amount of 35% by mass to 75% by mass, with respect to a total mass of the ink composition. If the above embodiment is adopted, migration and odor can be further suppressed.

When the ink composition contains a (meth)acrylate monomer having 3 or more functional groups, from the viewpoint of suppressing shrinking of a printed matter and maintaining the ink viscosity at a low level, a content of the (meth)acrylate monomer having 3 or more functional groups is preferably equal to or smaller than 30% by mass, more preferably equal to or smaller than 20% by mass, and even more preferably equal to or smaller than 15% by mass, with respect to a total amount of the ink composition.

Moreover, when the ink composition contains a monofunctional (meth)acrylate monomer which will be described later, from the viewpoint of suppressing migration, odor, and blocking, a content of the monofunctional (meth)acrylate monomer is preferably equal to or smaller than 50% by mass, more preferably equal to or smaller than 20% by mass, even more preferably equal to or smaller than 10% by mass, and particularly preferably equal to or smaller than 5% by mass, with respect to a total amount of the ink composition. It is most preferable for the ink composition not to contain the monofunctional (meth)acrylate monomer.

### (Component A-2) Polyfunctional (Meth)acrylate Oligomer

The ink composition of the present invention may contains (Component A-2) a polyfunctional (meth)acrylate oligomer as the Component A.

An oligomer generally refers to a polymer formed of a finite number of monomers (generally 5 to 100 monomers) having bound to one another, and any of known oligomers having 2 or more (meth)acryloyloxy groups can be selected. However, in the present invention, a weight average molecular weight of the polyfunctional (meth)acrylate oligomer is equal to or greater than 1,000, preferably 1,000 to 5,000, more preferably 1,500 to 4,500, and particularly preferably 2,000 to 4,000. If the weight average molecular weight is within the above range, it is possible to maintain the ink viscosity at a level appropriate for inkjet while suppressing migration of the cured film, odor, and blocking.

The weight average molecular weight is equal to or greater than 1,000. However, when the oligomer has molecular weight distribution, from the viewpoint of suppressing migration, it is preferable for the amount of components having a molecular weight of less than 1,000 to be equal to or smaller than 5% by mass with respect to a total amount of the polyfunctional (meth)acrylate oligomer.

The polyfunctional (meth)acrylate oligomer has 2 or more (meth)acryloyloxy groups, and the number of functional groups that the oligomer has is preferably 2 to 6, more preferably 2 to 4, even more preferably 2 or 3, and particularly preferably 2. Furthermore, the polyfunctional (meth)acrylate oligomer is preferably a polyfunctional acrylate oligomer.

As the polyfunctional (meth)acrylate oligomer in the present invention, oligoester (meth)acrylates are preferable. Among these, urethane (meth)acrylate, polyester (meth)acrylate, and epoxy (meth)acrylate are more preferable, and urethane (meth)acrylate is even more preferable.

Preferable examples of the urethane (meth)acrylate include aliphatic urethane (meth)acrylate and aromatic urethane (meth)acrylate, and among these, aliphatic urethane (meth)acrylate is more preferable.

Moreover, the urethane (meth)acrylate is preferably urethane (meth)acrylate having 4 or less functional groups, and more preferably bifunctional urethane (meth)acrylate.

If the ink composition contains the urethane (meth)acrylate, a ink composition that exhibits excellent adhesiveness with respect to a substrate and excellent curability is obtained.

Regarding the Component A-2, "Oligomer Handbook (supervised by Junji Furukawa, The Chemical Daily Co., Ltd.)" can also be referred to.

Examples of commercially available products of the polyfunctional (meth)acrylate oligomer include the following.

Examples of the urethane (meth)acrylate include R1204, R1211, R1213, R1217, R1218, R1301, R1302, R1303, R1304, R1306, R1308, R1901, R1150, and the like manufactured by DAI-ICHI KOGYO SEIYAKU CO., LTD., an EBECRYL series manufactured by Daicel-Cytec Company Ltd. (for example, EBECRYL 230, 270, 4858, 8402, 8804, 8807, 8803, 9260, 1290, 1290K, 5129, 4842, 8210, 210, 4827, 6700, 4450, and 220), NK Oligo U-4HA, U-6HA, U-15HA, U-108A, U200AX, and the like manufactured by SHIN-NAKAMURA CHEMICAL CO., LTD., Aronix M-1100, M-1200, M-1210, M-1310, M-1600, and M-1960 manufactured by TOAGOSEI CO., LTD, and the like.

Examples of the polyester (meth)acrylate include an EBECRYL series manufactured by Daicel-Cytec Company Ltd. (for example, EBECRYL 770, IRR 467, 81, 84, 83, 80, 675, 800, 810, 812, 1657, 1810, IRR 302, 450, 670, 830, 870, 1830, 1870, 2870, IRR 267, 813, IRR 483, and 811), Aronix M-6100, M-6200, M-6250, M-6500, M-7100, M-8030, M-8060, M-8100, M-8530, M-8560, and M-9050 manufactured by TOAGOSEI CO., LTD., and the like.

Examples of the epoxy (meth)acrylate include an EBECRYL series manufactured by Daicel-Cytec Company Ltd. (for example, EBECRYL 600, 860, 2958, 3411, 3600, 3605, 3700, 3701, 3703, 3702, 3708, RDX 63182 and 6040) and the like.

One kind of the polyfunctional (meth)acrylate oligomer may be used singly, or two or more kinds thereof may be used concurrently.

A content of the Component A-2 in the ink composition of the present invention is preferably equal to or smaller than 15% by mass and more preferably equal to or smaller than 10% by mass with respect to a total mass of the ink composition.

In the present invention, the ink composition may further contain other polymerizable compounds in addition to the Component A (Component A-1 and Component A-2).

Other polymerizable compounds are preferably ethylenically unsaturated compounds, and examples thereof include radical-polymerizable compounds including N-vinyl lactams (preferably N-vinyl caprolactam); isobornyl acrylate; unsaturated carboxylic acid such as itaconic acid, crotonic acid, isocrotonic acid, and maleic acid and salts of these; anhydrides having an ethylneically unsaturated group; acrylonitrile; styrene; various unsaturated polyesters; unsaturated polyether; unsaturated polyamide; unsaturated urethane; (meth)acrylamide compounds; and vinyl ether compounds. Among these, N-vinyl caprolactam and isobornyl acrylate are preferable, and a combination of N-vinyl caprolactam and isobornyl acrylate is more preferable.

Moreover, as other polymerizable compounds, specifically, it is possible to use commercially available products described in "Crosslinking Agent Handbook" edited by Shinzo Yamashita (1981, TAISEISHA LTD.); "UV-EB Curing Handbook (Raw Materials)" edited by Kiyomi Kato (1985, Kobunshi Kankokai); "Application of UV-EB Curing Technology and Market" edited by RadTech Japan, p. 79 (1989, CMC Publishing Co., Ltd.); "Polyester Resin Handbook" written by Eiichi Takiyama (1988, NIKKAN KOGYO SHIMBUN, LTD.); and the like and radical-polymerizable or crosslinkable monomers, oligomers, and polymers known in the related art.

A molecular weight of other polymerizable compounds is preferably 80 to 2,000, more preferably 80 to 1,000, and even more preferably 80 to 800.

When the ink composition of the present invention contains other polymerizable compounds, a content of other polymerizable compounds in the ink composition of the present invention is preferably 1% by mass to 40% by mass, more preferably 3% by mass to 30% by mass, and particularly preferably 5% by mass to 25% by mass, with respect to a total amount of the ink composition.

(Component B) 1-[4-(4-benzoylphenylsulfanyl)phenyl]-2-methyl-2-(4-methylphenylsulfonyl)propan-1-one

The ink composition of the present invention contains the (Component B) 1-[4-(4-benzoylphenylsulfanyl)phenyl]-2-methyl-2-(4-methylphenylsulfonyl)propan-1-one.

The chemical structure of the Component B is as follows.

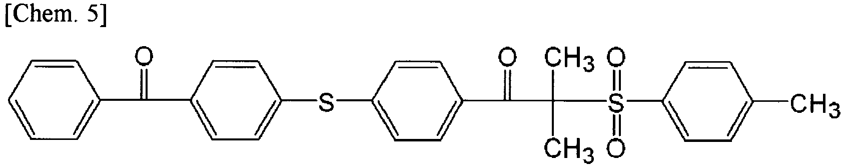

A content of the Component B in the ink composition of the present invention is preferably 0.3% by mass to 5.0% by mass, more preferably 0.6% by mass to 4.0% by mass, and particularly preferably 1.0% by mass to 3.0% by mass. If the content is within the above range, a migration of components in the film that are eluted to the outside is reduced, and odor of the printed matter is suppressed.

### (Component C) Compound Represented by Formula (1) or Formula (2)

The ink composition of the present invention contains the (Component C) compound represented by Formula (1) or Formula (2). If the Component B and the Component C are concurrently used, an ink-jet ink composition, which reduces a migration of components in the film that are eluted to the outside, suppresses odor of the printed matter, and exhibits excellent curability and blocking resistance, is obtained.

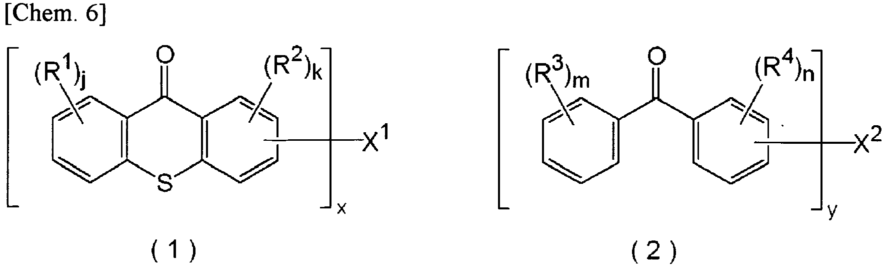

(In Formula (1) and Formula (2), each of R¹, R², R³, and R⁴ independently represents an alkyl group having 1 to 5 carbon atoms or represents a halogen atom; each of x and y independently represents an integer from 2 to 4; each of j and m independently represents an integer from 0 to 4; each of k and n independently represents an integer from 0 to 3; when j, k, m, and n are an integer of equal to or greater than 2, plural R¹s, R²s, R³s, and R⁴s may be the same as or different from each other; X¹ represents an x-valent linking group containing at least one of the hydrocarbon chain, ether bond, and ester bond; and X² represents a y-valent linking group containing at least one of the hydrocarbon chain, ether bond, and ester bond.)

### <Compound Represented by Formula (1)>

It is preferable for the ink composition of the present invention to contain a compound represented by Formula (1) as the Component C.

In Formula (1), each of R¹ and R² independently represents an alkyl group having 1 to 5 carbon atoms or represents a halogen atom. The alkyl group having 1 to 5 carbon atoms may be linear, branched, or cyclic, but the alkyl group is preferably linear or branched. Moreover, the alkyl group is preferably an alkyl group having 1 to 4 carbon atoms, more preferably an alkyl group having 2 or 3 carbon atoms, and even more preferably an ethyl group or an isopropyl group.

Examples of the halogen atom include a fluorine atom, a chlorine atom, a bromine atom, and an iodine atom, and among these, a chlorine atom is preferable.

It is particularly preferable for each of R¹ and R² to independently represents an ethyl group, an isopropyl group, or a chlorine atom.

In Formula (1), j represents an integer from 0 to 4. j is preferably from 0 to 2 and more preferably 0 or 1. When j is equal to or greater than 2, plural R¹s may be the same as or different from each other.

In Formula (1), k represents an integer from 0 to 3. k is preferably from 0 to 2, more preferably 0 or 1, and even more preferably 0. When k is equal to or greater than 2, plural R²s may be the same as or different from each other.

In Formula (1), x represents an integer from 2 to 4. x is more preferably 3 or 4 and even more preferably 4.

In Formula (1), X¹ represents an x-valent linking group formed of an x-valent hydrocarbon chain having 2 to 300 carbon atoms that may contain a hydrocarbon chain, an ether bond (-O-) and/or an ester bond (-(C=O)-O-).

Moreover, in Formula (1), there are plural thioxanthone structures (the structure shown in the bracket in Formula (1)) excluding X¹ representing a linking group (Formula (1) has a plurality of the structures in a number of x). The structures are not particularly limited and may be the same as or different from each other. From the viewpoint of synthesis, it is preferable for the structures to be the same as each other.

In the compound represented by the Formula (1), a substitution position, in which substitution of a group to thioxanthone occurs, is described as below.

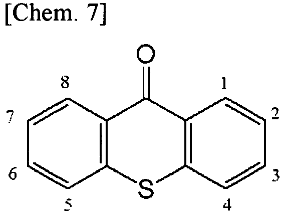

When the substitution position of X¹ includes positions 1 to 4, the substitution position of X¹ is preferably position 2, position 3, or position 4, more preferably position 2 or position 4, and even more preferably position 4.

The substitution position of R¹ is not particularly limited, but is preferably position 6 or position 7, and more preferably position 6.

Moreover, the substitution position of R² is not particularly limited, but is preferably position 1, position 2, or position 3, and more preferably position 1.

The compound represented by Formula (1) is preferably a compound represented by the following Formula (1').

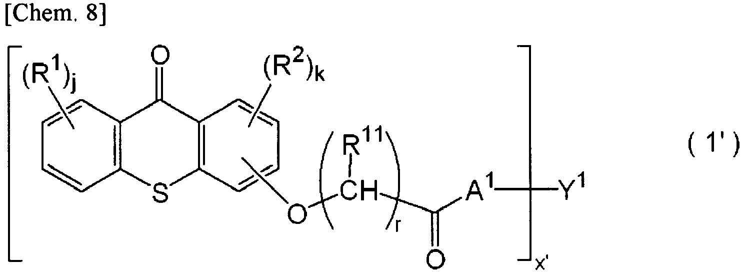

R¹, R², j, and k in Formula (1') have the same definition as R¹, R², j, and k in Formula (1) respectively, and preferable ranges thereof are also the same.

In Formula (1'), each R¹¹ independently represents a hydrogen atom or an alkyl group having 1 to 4 carbon atoms. R¹¹ is preferably a hydrogen atom, a methyl group, or an ethyl group, and more preferably a hydrogen atom.

In Formula (1'), each r independently represents an integer from 1 to 6. r is preferably an integer from 1 to 3, more preferably 1 or 2, and even more preferably 1. Furthermore, when r is equal to or greater than 2, plural R¹¹s may be the same as or different from each other.

x' represents an integer from 2 to 4. x' is preferably 2 or 3, and more preferably 2.

Y¹ represents a residue formed when hydrogen atoms of hydroxy groups in a number of x' are removed from a polyhydroxy compound having the hydroxy groups in at least a number of x'. Y¹ is preferably a residue formed when hydrogen atoms of all hydroxy groups (in a number of x') are removed from the polyhydroxy compound having the hydroxy groups in a number of x'. Specifically, Y¹ is preferably a residue formed when hydrogen atoms of hydroxy groups in a number of x' are removed from a polyhydroxy compound selected from ethylene glycol, propylene glycol, butylene glycol, glycerin, trimethylolpropane, ditrimethylolpropane, and pentaerythritol. Y¹ is preferably a residue formed when hydrogen atoms of all of the hydroxy groups are removed.

In Formula (1'), A¹ represents a group selected from a group consisting of the following (i) to (iii).

### [Chem. 9]

∗-[O(CHR¹²CHR¹³)ₐ]_{z}-∗∗ (i)

∗-[O(CH₂)_{b}CO]_{z}- ∗∗ (ii)

∗-[O(CH₂)_{b}CO]_{(z-1)}-[O(CHR¹²CHR¹³)ₐ]- ∗∗ (iii)

(In Formula (i) to Formula (iii), one of R¹² and R¹³ represents a hydrogen atom, and the other represents a hydrogen atom, a methyl group, or an ethyl group; a represents an integer of 1 or 2; b represents an integer of 4 or 5; z represents an integer from 1 to 20; * represents a binding site at which (i) to (iii) bind to a carbonyl carbon; and ∗∗ represents a binding site at which (i) to (iii) bind to Y¹.)

A¹ is preferably a group represented by Formula (i). A¹ is more preferably ∗-(OCH₂CH₂)_{z}-∗∗, ∗-(OCH₂CH₂CH₂CH₂)_{z}-∗∗, or ∗-O(CH(CH₃)CH₂)_{z}-∗∗, and in this case, z is more preferably an integer from 3 to 10.

A molecular weight of the compound represented by Formula (1) is preferably 500 to 3,000, more preferably 800 to 2,500, and even more preferably 1,000 to 2,000.

If the molecular weight is equal to or greater than 500, an ink composition, which suppresses elution of the compound from the cured film and suppresses migration, odor, and blocking, is obtained. On the contrary, if the molecular weight is equal to or smaller than 3,000, steric hindrance of molecules occurs to a small extent, a degree of freedom of molecules in a liquid/film is maintained, and high sensitivity is obtained.

Moreover, when the compound represented by Formula (1) is a mixture consisting of plural compounds which differ from one another in terms of the number of carbon atoms and the like, it is preferable for the weight average molecular weight thereof to be within the above range.

Specific examples of the compound represented by Formula (1) will be shown below, but the present invention is not limited to the following compounds.

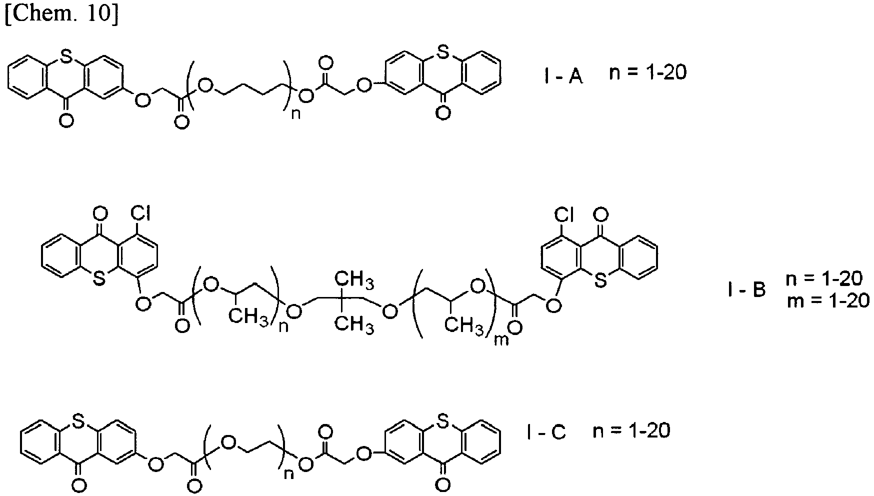

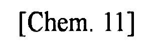

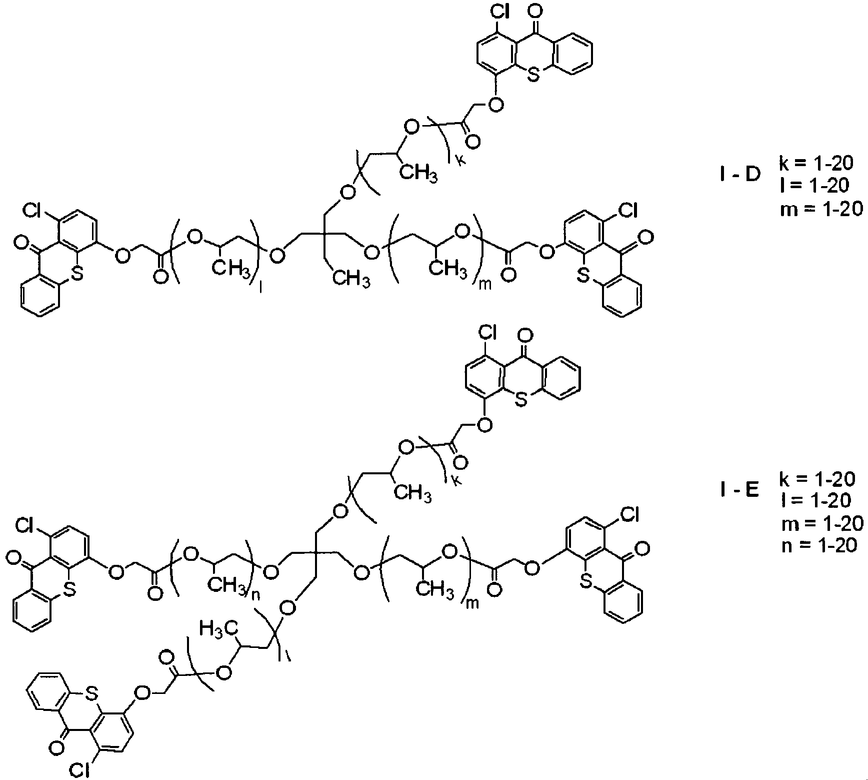

Among these, the compound (I-A) or (I-E) is preferable, and the compound (I-E) is more preferable.

As the compound represented by Formula (1), commercially available compounds can be used. Specific examples of the compounds include SPEEDCURE 7010 (1,3-di({α-[1-chloro-9-oxo-9H-thioxanthen-4-yl]oxy}acetylpoly[oxy(1-methylethylene)])oxy-2,2-bis({∗-[1-chloro-9-oxo-9H-thioxanthen-4-yl]oxy}acetylpoly[oxy(1-methylethylene)])oxy methylpropane, CAS No. 1003567-83-6, manufactured by Lambson Limited), and OMNIPOL TX (polybutyleneglycol bis(9-oxo-9H-thioxanthenyloxy)acetate, CAS No. 813452-37-8, manufactured by Rahn AG Inc.).

The compound represented by Formula (1) can be produced by a known reaction and is not particularly limited. For example, the compound represented by the Formula (1') can be prepared by causing a reaction between a compound represented by the following Formula (1-1) and a compound represented by the following Formula (1-2).

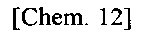

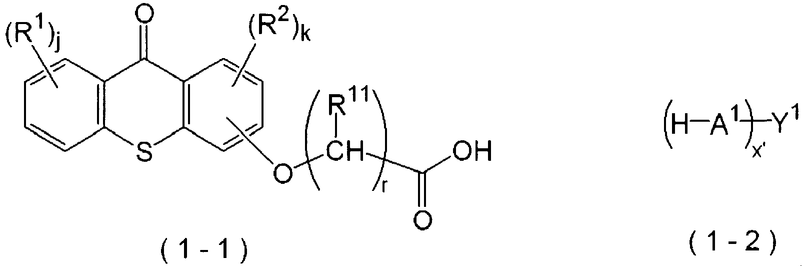

R¹, R², R¹¹, A¹, Y¹, j, k, r, and x' in Formula (1-1) and Formula (1-2) have the same definition as R¹, R², R¹¹, A¹, Y¹, j, k, r, and x' in Formula (1'), and preferable ranges thereof are also the same.

It is preferable to perform the reaction in the presence of a solvent, and examples of appropriate solvents include aromatic hydrocarbon such as benzene, toluene, and xylene.

Moreover, it is preferable to perform the reaction in the presence of a catalyst, and examples of the catalyst include sulfonic acid (for example, p-toluenesulfonic acid and methanesulfonic acid), inorganic acids (for example, sulfuric acid, hydrochloric acid, and phosphoric acid), Lewis acid (aluminum chloride, boron trifluoride, and organotitanate), and the like.

The reaction temperature and the reaction time are not particularly limited.

After the reaction ends, the product is isolated from the reaction mixture by known means, and if necessary, the products is washed and dried. The product can be separated in this manner.

### <Compound Represented by Formula (2)>

It is preferable for the ink composition of the present invention to contain a compound represented by Formula (2) as the Component C.

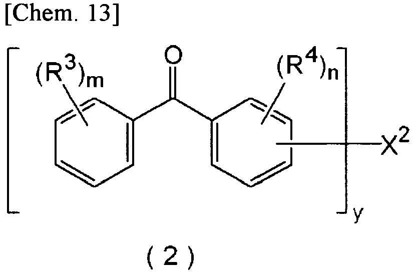

(In Formula (2), each of R³ and R⁴ independently represents an alkyl group having 1 to 5 carbon atoms or represents a halogen atom; m represents an integer from 0 to 4; n represents an integer from 0 to 3; y represents an integer from 2 to 4; when m and n are equal to or greater than 2, plural R³s and R⁴s may be the same as or different from each other; and X² represents a y-valent linking group containing at least one of the hydrocarbon chain, ether bond, and ester bond.)

In Formula (2), each of R³ and R⁴ independently represents an alkyl group having 1 to 5 carbon atoms or represents a hydrogen atom. The alkyl group having 1 to 5 carbon atoms may be linear, branched, or cyclic, but it is preferable for the alkyl group to be linear or branched. Moreover, the alkyl group preferably an alkyl group having 1 to 4 carbon atoms, more preferably an alkyl group having 2 or 3 carbon atoms, and even more preferably an ethyl group or an isopropyl group. Examples of the halogen atom include a fluorine atom, a chlorine atom, a bromine atom, and an iodine atom, and among these, a chlorine atom is preferable. It is particularly preferable for R³ and R⁴ to be an ethyl group, an isopropyl group, or a chlorine atom.

In Formula (2), m represents an integer from 0 to 4. m is preferably from 0 to 2, and more preferably 0 or 1. When m is equal to or greater than 2, plural R³s may be the same as or different from each other.

In Formula (2), n represents an integer from 0 to 3. n is preferably from 0 to 2, more preferably 0 or 1, and even more preferably 0. When m is equal to or greater than 2, plural R⁴s may be the same as or different from each other.

In Formula (2), y represents an integer from 2 to 4. y is more preferably 2 or 3, and even more preferably 2.

In Formula (2), X² represents a y-valent linking group containing at least one kind selected from a group consisting of a hydrocarbon chain, an ether bond (-O-), and an ester bond (-(C=O)-O-).

Moreover, in Formula (2), there are plural benzophenone structures (the structure shown in the bracket in Formula (2)) excluding X² representing a linking group (Formula (2) has a plurality of the structures in a number of y). The structures are not particularly limited and may be the same as or different from each other. From the viewpoint of synthesis, it is preferable for the structures to be the same as each other.

In the compound represented by the Formula (2), a substitution position, in which substitution of a group to benzophenone occurs, is described as below.

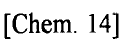

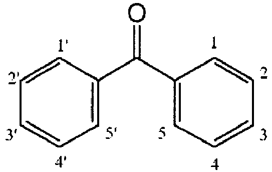

When the substitution position of X² includes positions 1 to 5, the substitution position of X² is preferably position 2 or position 3, and more preferably position 3.

The substitution position of R³ is not particularly limited, but is preferably position 2' or position 3', and more preferably position 3'.

Moreover, the substitution position of R⁴ is not particularly limited, but is preferably position 2, position 3, or position 4.

The compound represented by Formula (2) is preferably a compound represented by the following Formula (2').

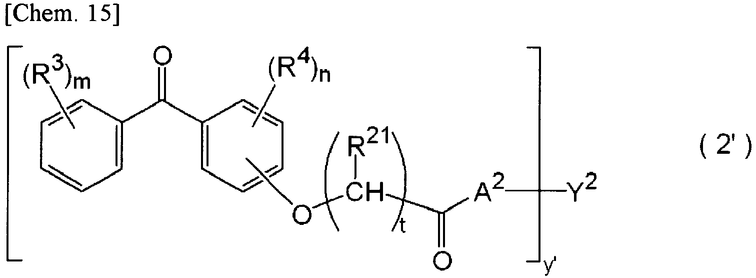

R³, R⁴, m, and n in Formula (2') have the same definition as R³, R⁴, m, and n in Formula (2) respectively, and preferable ranges thereof are also the same.

In Formula (2'), each R²¹ independently represents a hydrogen atom or an alkyl group having 1 to 4 carbon atoms. R²¹ is preferably a hydrogen atom, a methyl group, or an ethyl group, and more preferably a hydrogen atom.

In Formula (2'), each t independently represents an integer from 1 to 6. t is preferably an integer from 1 to 3, more preferably 1 or 2, and even more preferably 1. Furthermore, when t is equal to or greater than 2, plural R²¹s may be the same as or different from each other.

y' represents an integer from 2 to 4. y' is preferably 2 or 3, and more preferably 2.

Y² represents a residue formed when hydrogen atoms of hydroxy groups in a number of y' are removed from a polyhydroxy compound having the hydroxy groups in at least a number of y'. Y¹ is preferably a residue formed when hydrogen atoms of all hydroxy groups (in a number of y') are removed from the polyhydroxy compound having the hydroxy groups in a number of y'. Specifically, Y² is preferably a residue formed when hydrogen atoms of hydroxy groups in a number of y' are removed from a polyhydroxy compound selected from a group consisting of ethylene glycol, propylene glycol, butylene glycol, glycerin, trimethylolpropane, ditrimethylolpropane, and pentaerythritol. Y² is preferably a residue formed when hydrogen atoms of all of the hydroxy groups are removed.

In Formula (2'), A² represents a group selected from a group consisting of the following (i) to (iii).

### [Chem. 16]

∗-[O(CHR¹²CHR¹³)ₐ]_{z}-∗∗ (i)

∗-[O(CH₂)_{b}CO]_{z}- ** (ii)

∗-[O(CH₂)_{b}CO]_{(z-1)}-[O(CHR¹²CHR¹³)ₐ] ** (iii)

(In Formula (i) to Formula (iii), one of R¹² and R¹³ represents a hydrogen atom, and the other represents a hydrogen atom, a methyl group, or an ethyl group; a represents an integer of 1 or 2; b represents an integer of 4 or 5; z represents an integer from 1 to 20; * represents a binding site at which (i) to (iii) bind to a carbonyl carbon; and ** represents a binding site at which (i) to (iii) bind to Y².)

A² is preferably a group represented by Formula (i). A² is more preferably ∗-(OCH₂CH₂)_{z}-∗∗, ∗-(OCH₂CH₂CH₂CH₂)_{z}-∗∗, or ∗-O(CH(CH₃)CH₂)_{z}-∗∗, and in this case, z is more preferably an integer from 3 to 10.

A molecular weight of the compound represented by Formula (2) is preferably 500 to 3,000, more preferably 800 to 2,500, and even more preferably 1,000 to 2,000.

If the molecular weight is equal to or greater than 500, an ink composition, which suppresses elution of the compound from the cured film and suppresses migration, odor, and blocking, is obtained. On the contrary, if the molecular weight is equal to or smaller than 3,000, steric hindrance of molecules occurs to a small extent, a degree of freedom of molecules in a liquid/film is maintained, and high sensitivity is obtained.

Moreover, when the compound represented by Formula (2) is a mixture consisting of plural compounds which differ from one another in terms of the number of carbon atoms and the like, it is preferable for the weight average molecular weight thereof to be within the above range.

Specific examples of the compound represented by Formula (2) will be shown below, but the present invention is not limited to the following compounds.

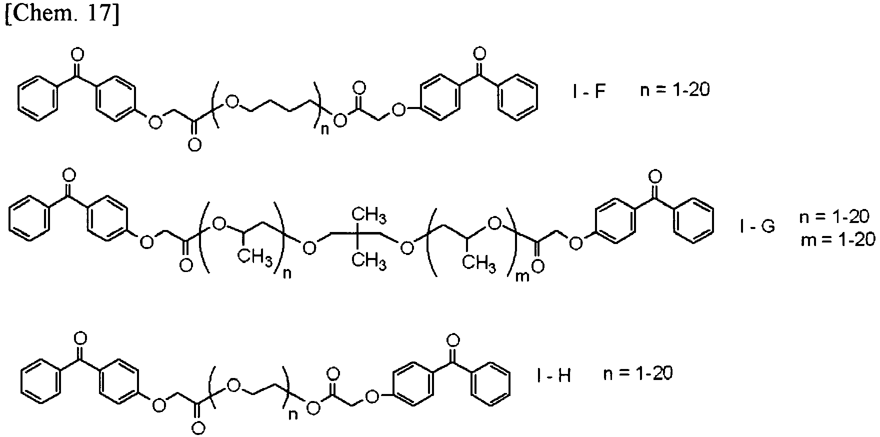

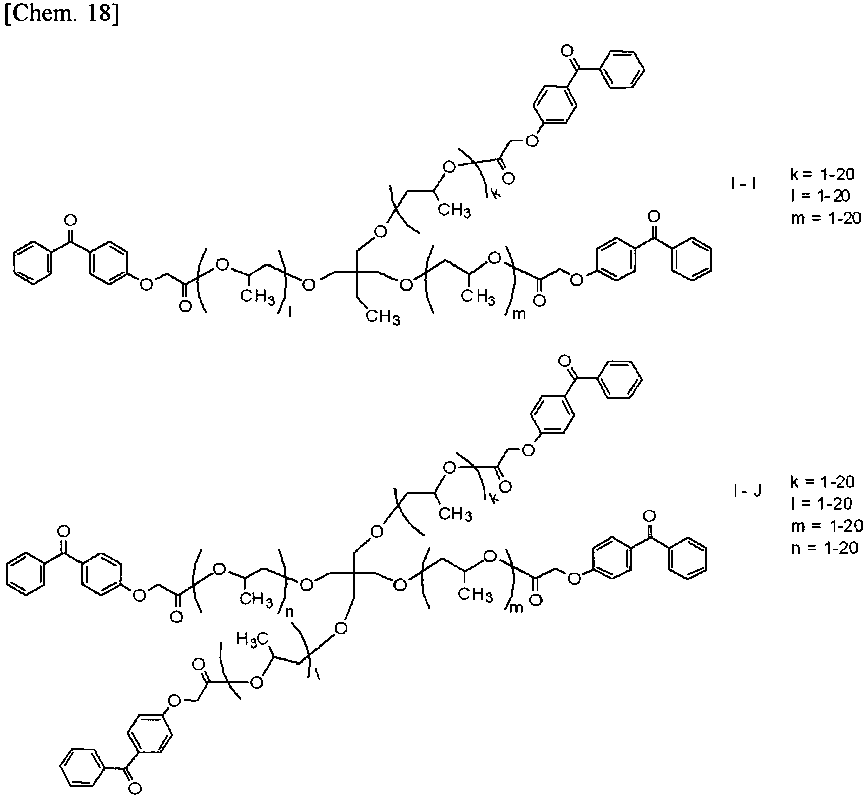

As the compound represented by Formula (2), commercially available compounds can be used. Specific examples of the compounds include OMNIPOL BP (polybutyleneglycol bis(4-benzoylphenoxy)acetate, CAS No. 515136-48-8, manufactured by Rahn AG Inc).

The compound represented by Formula (2) can be produced by a known raction and is not particularly limited. For example, the compound represented by the Formula (2') can be prepared by causing a reaction between a compound represented by the following Formula (2-1) and a compound represented by the following Formula (2-2).

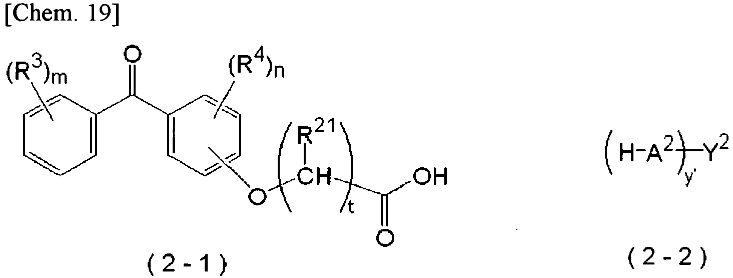

(R³, R⁴, R²¹, A², Y², m, n, t, and y' in Formula (2-1) and Formula (2-2) have the same definition as R³, R⁴, R²¹, A², Y², m, n, t, and y' in Formula (2'), and preferable ranges thereof are also the same.)

It is preferable to perform the reaction in the presence of a solvent, and examples of appropriate solvents include aromatic hydrocarbon such as benzene, toluene, and xylene.

Moreover, it is preferable to perform the reaction in the presence of a catalyst, and examples of the catalyst include sulfonic acid (for example, p-toluenesulfonic acid and methanesulfonic acid), inorganic acids (for example, sulfuric acid, hydrochloric acid, and phosphoric acid), Lewis acid (aluminum chloride, boron trifluoride, and organotitanate), and the like.

The reaction temperature and the reaction time are not particularly limited.

After the reaction ends, the product is isolated from the reaction mixture by known means, and if necessary, the products is washed and dried. The product can be separated in this manner.

From the viewpoint of increasing sensitivity and suppressing migration, odor, and blocking, a content of the compound represented by Formula (2) is preferably 1% by mass to 5% by mass, and more preferably 2% by mass to 4% by mass, with respect to a total amount of the ink composition.

Moreover, as the compound represented by Formula (2), the compound represented by Formula (2-1) is preferable.

It is preferable for the ink composition of the present invention to contain the compound represented by Formula (1) and the compound represented by Formula (2). Provided that a content of the compound represented by Formula (1) and the compound represented by Formula (2) with respect to a total amount of the ink composition is W1 and W2 (% by mass) respectively, W1:W2 is preferably 1:10 to 10:1, more preferably 1:4 to 4:1, and even more preferably 1:2 to 2:1.

Furthermore, a total content of the Component C is preferably 1.0% by mass to 15.0% by mass, more preferably 2.0% by mass to 10.0% by mass, and even more preferably 2.0% by mass to 6.0% by mass, with respect to a total amount of the ink composition. If the content is within the above range, excellent curability is obtained.

In addition, from the viewpoint of suppressing migration and odor and from the viewpoint of curability, a mass ratio between a content of the Component B and a total content of the Component C ((Content of Component B): (Content of Component C)) is preferably 2:1 to 1:15, and more preferably 1:1 to 1:10.

### <Other Polymerization Initiators>

The ink composition of the present invention may contain polymerization initiators other than the component B and the component C. Moreover, among other polymerization initiators, from the viewpoint of suppressing migration, odor and blocking, particularly, a content of polymerization initiator having a molecular weight of less than 340 is 0% by mass or equal to or smaller than 1% by mass, preferably 0% by mass or equal to or smaller than 0.5% by mass, more preferably 0% by mass or equal to or smaller than 0.3% by mass, and particularly preferably 0% by mass, with respect to a total amount of the ink composition.

The ink composition of the present invention preferably contains a compound represented by Formula (3) as other polymerization initiators. It is assumed that when being added to the ink composition, the compound represented by Formula (3) may donate a hydrogen atom and function as a co-initiator, and thus sensitivity may be improved. Particularly, it is assumed the hydrogen atom may be donated to the compound represented by Formula (1) or (2) in an excited state, where by sensitivity may be improved. In addition, migration and odor are further suppressed in a case of using the compound represented by Formula (3), compared to a case of using amine compounds having a low molecular weight.

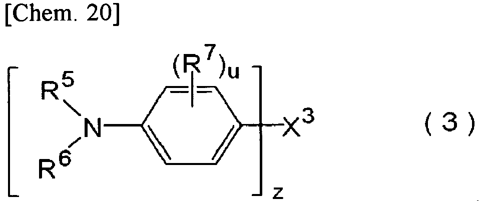

(In Formula (3), each of R⁵, R⁶, and R⁷ independently represents a hydrogen atom or an alkyl group having 1 to 5 carbon atoms; z represents an integer from 2 to 4, u is 4, and X³ represents an z-valent hydrocarbon chain having 2 to 300 carbon atoms that may have an ether bond and/or an ester bond.)

In Formula (3), each of R⁵ and R⁶ independently represents a hydrogen atom or an alkyl group having 1 to 5 carbon atoms, and among these, an alkyl group having 1 to 5 carbon atoms is preferable. The alkyl group having 1 to 5 carbon atoms may be linear, branched, or cyclic, but the alkyl group is preferably linear or branched. The alkyl group is preferably an alkyl group having 1 to 4 carbon atoms, more preferably an ethyl group or a methyl group, and most preferably a methyl group.

In Formula (3), each R⁷ independently represents a hydrogen atom or an alkyl group having 1 to 5 carbon atoms. The alkyl group having 1 to 5 carbon atoms may be linear, branched, or cyclic, but the alkyl group is preferably linear or branched. Moreover, the alkyl group is preferably an alkyl group having 1 to 4 carbon atoms, more preferably an alkyl group having 1 o 2 carbon atoms, and most preferably a methyl group. Among these, it is preferable for two or more R⁷s to be hydrogen atoms; it is more preferable for three or more R⁷s to be hydrogen atoms; and it is even more preferable for four or more R⁷s to be hydrogen atoms.

In Formula (3), z represents an integer from 2 to 4. z is more preferably 2 or 3, and even more preferably 2.

In Formula (3), X³ represents an z-valent linking group consisting of a z-valent hydrocarbon chain having 2 to 300 carbon atoms that may have an ether bond (-O-) and/or an ester bond (-(C=O)-O-).

Moreover, in Formula (3), there are plural structures (the structure shown in the bracket in Formula (1)) excluding X³ representing a linking group (Formula (3) has a plurality of the structures in a number of z). The structures are not particularly limited and may be the same as or different from each other. From the viewpoint of synthesis, it is preferable for the structures to be the same as each other.

The compound represented by Formula (3) is preferably a compound represented by the following Formula (3').

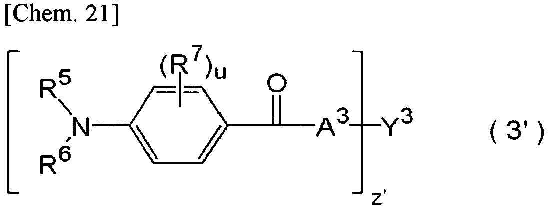

In Formula (3'), R⁵ to R⁷, and u have the same definition as R⁵ to R⁷, and u in Formula (3), and preferable ranges thereof are also the same.

z' represents an integer from 2 to 4. z is preferably 2 or 3, and even more preferably 2.

Y³ represents a residue formed when hydrogen atoms of hydroxy groups in a number of z' are removed from a polyhydroxy compound having the hydroxy groups in at least a number of z'. Y³ is preferably a residue formed when hydrogen atoms of all hydroxy groups (in a number of z') are removed from the polyhydroxy compound having the hydroxy groups in a number of z'. Specifically, Y³ is preferably a residue formed when hydrogen atoms of hydroxy groups in a number of z' are removed from a polyhydroxy compound selected from ethylene glycol, propylene glycol, butylene glycol, glycerin, trimethylolpropane, ditrimethylolpropane, and pentaerythritol. Y³ is more preferably a residue formed when hydrogen atoms of all of the hydroxy groups are removed.

In Formula (3'), each A³ independently represents a group which is selected from a group consisting of the following (i) to (iii).

### [Chem. 22]

* -[O(CHR¹²CHR¹³)ₐ]_{d}-∗∗ (i)

∗ -(O(CH₂)_{b}CO]_{d}-∗∗ (ii)

∗-[O(CH₂)_{b}CO]_{(d-1)}-[O(CHR¹²CHR¹³)ₐ]- ∗∗ (iii)

(In Formula (i) to Formula (iii), one of the R¹² and R¹³ represents a hydrogen atom, and the other represents a hydrogen atom, a methyl group, or an ethyl group; a represents an integer of 1 or 2; b represents an integer of 4 or 5; and d represents an integer from 0 to 20; * represents a binding site at which (i) to (iii) bind to carbonyl carbon; and ** represents a binding site at which (i) to (iii) bind to Y³; and in at least one of the plural A³s present in a number of z', d represents an integer from 1 to 20.)

A³ is preferably a group represented by Formula (i), and more preferably *-(OCH₂CH₂)_{z}-**, *-(OCH₂CH₂CH₂CH₂)_{z}-**, or *-O(CH(CH₃)CH₂)_{z}-**. In this case, d is more preferably an integer from 3 to 10.

A molecular weight of the compound represented by Formula (3) is preferably 500 to 3,000, more preferably 800 to 2,500, and even more preferably 1,000 to 2,000.

When the molecular weight is equal to or greater than 500, it is possible to obtain an ink composition which suppresses elution of the compound from the cured film and suppresses migration, odor, and blocking. On the contrary, when the molecular weight is equal to or smaller than 3,000, steric hindrance of molecules occurs to a small extent, a degree of freedom of molecules in a liquid/film is maintained, and high sensitivity is obtained.

Moreover, when the compound represented by Formula (3) is a mixture consisting of plural compounds which differ from one another in terms of the number of carbon atoms and the like, it is preferable for the weight average molecular weight thereof to be within the above range.

Specific examples of the compound represented by Formula (3) will be shown below, but the present invention is not limited to the following compounds.

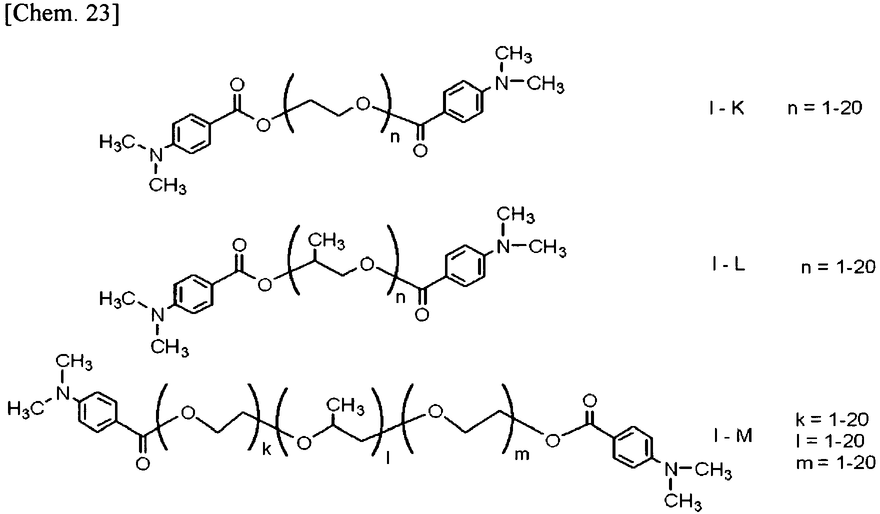

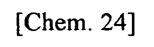

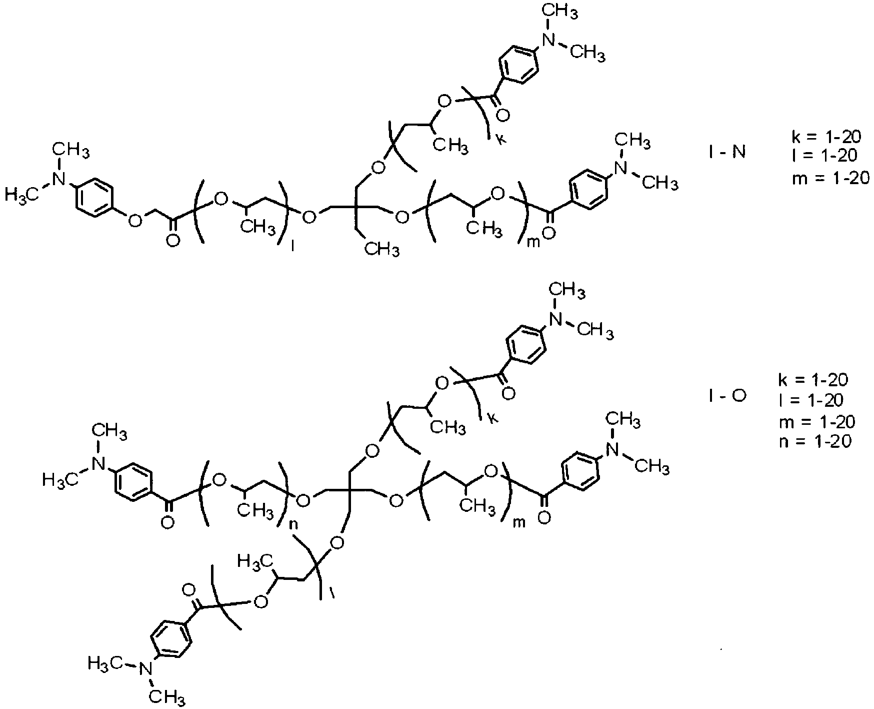

As the compound represented by Formula (3), commercially available products may be used, and examples thereof include SPEEDCURE 7040 (manufactured by Lambson limited).

The synthesis method of the compound represented by Formula (3) is not particularly limited, and for example, the compound represented by Formula (I-K) is obtained by performing a dehydrochlorination reaction of p-dimethylaminobenzoyl chloride and polyethylene glycol and then neutralizing the product with a base.

One kid of the compound represented by Formula (3) may be used singly, or two or more kinds thereof may be used concurrently.

In addition, a content of the compound represented by Formula (3) is preferably 1.0% by mass to 15.0% by mass, more preferably 2.0% by mass to 10.0% by mass, and even more preferably 2.0% by mass to 6.0% by mass of the total ink composition. If the content is within the above ranges, curability becomes excellent.

Examples of other polymerization initiators include (a) aromatic ketones, (b) an acylphosphine compound, (c) an aromatic onium salt compound, (d) an organic peroxide, (e) thio compound, (f) a hexaarylbiimidazole compound, (g) a ketoxime ester compound, (h) a borate compound, (i) an azinium compound, (j) a metallocene compound, (k) an active ester compound, (1) a compound having a carbon-halogen bond, (m) an alkyl amine compound, and the like, in addition to the compounds described above. As these radical polymerization initiators, one kind among the compounds (a) to (m) may be used singly, or these compounds may be used in combination. Details of the polymerization initiators are described in paragraphs [0090] to [0116] of JP2009-185186A.

It is preferable to use one kind of other polymerization initiators in the present invention singly. Or alternatively, it is preferable to use two or more kinds thereof concurrently.

Examples of other polymerization initiators which can be used in the present invention include an acyl phosphine compound, an α-hydroxy ketone compound, and/or an α-amino ketone compound.

Preferable examples of the acyl phosphine compound include bis(2,4,6-trimethyl benzoyl)phenyl phosphine oxide, bis(2,6-dimethyl benzoyl)phenyl phosphine oxide, bis(2,4,6-trimethyl benzoyl)-2-methoxyphenyl phosphine oxide, bis(2,6-dimethyl benzoyl)-2-methoxyphenyl phosphine oxide, bis(2,4,6-trimethyl benzoyl)-2,4-dimethoxyphenyl phosphine oxide, bis(2,6-dimethyl benzoyl)-2,4-dimethoxyphenyl phosphine oxide, bis(2,4,6-trimethyl benzoyl)-2,4-dipentyloxyphenyl phosphine oxide, bis(2,6-dimethyl benzoyl)-2,4-dipentyloxyphenyl phosphine oxide, 2,4,6-trimethyl benzoyl ethoxyphenyl phosphine oxide, 2,6-dimethyl benzoyl methoxyphenyl phosphine oxide, 2,4,6-trimethyl benzoyl methoxyphenyl phosphine oxide, 2,6-dimethyl benzoyl methoxyphenyl phosphine oxide, 2,4,6-trimethyl benzoyl (4-pentyloxyphenyl)phenyl phosphine oxide, and 2,6-dimethyl benzoyl (4-pentyloxyphenyl)phenyl phosphine oxide.

Moreover, from the viewpoint of curability, as other polymerization initiators, aromatic ketones are preferable.

As the aromatic ketones, an α-hydroxy ketone compound and/or an α-amino ketone compound is preferable.

As the α-hydroxy ketone compound, known α-hydroxy ketone compound can be used, and examples thereof include 1-[4-(2-hydroxyethoxy)-phenyl]-2-hydroxy-2-methyl-1-propane-1-one, 2-hydroxy-2-methyl-1-phenyl-propane-1-one, and 1-hydroxycyclohexyl phenyl ketone, and among these, 1-hydroxycyclohexyl phenyl ketone compound is preferable. Moreover, in the present invention, the 1-hydroxycyclohexyl phenyl ketone compound includes a compound formed when the 1-hydroxycyclohexyl phenyl ketone is substituted with any substituent. The substituent can be arbitrarily selected from substituents showing ability of a radical polymerization initiator, and specific examples thereof include an alkyl group having 1 to 4 carbon atoms.

In addition, as the α-aminoketone, known α-aminoketone can be used, and the specific examples thereof include 2-methyl-1-phenyl-2-morpholinopropan-1-one, 2-methyl-1-[4-(hexyl)phenyl]-2-morpholinopropan-1-one, and 2-ethyl-2-dimethylamino-1-(4-morpholinophenyl)butan-1-one. In addition, preferable examples of the α-aminoketone also include commercially available products such as IRGACURE 907, IRGACURE 369, and IRGACURE 379 manufactured by BASF Japan, Ltd.

In addition, other polymerization initiators are not particularly limited, and the examples thereof include SPEEDCURE 7040 manufactured by Lambson limited, SPEEDCURE ITX, LUCIRINTPO, IRGACURE 184, and IRGACURE 907 manufactured by BASF Corp. and the like.

In order to accelerate decomposition of the polymerization initiator by absorbing specific actinic energy rays, it is preferable for the ink composition of the present invention to contain a compound which functions as a sensitizer (hereinafter, simply referred to as "sensitizer") as a polymerization initiator.

Examples of the sensitizer include polynuclear aromatics (for example, pyrene, perylene, triphenylene, 2-ethyl-9,10-dimethoxy-anthracene, or the like), xanthenes (for example, fluorescein, eosin, erythrosine, rhodamine B, rose bengal, or the like), cyanines (for example, thiacarbocyanine, oxacarbocyanine, or the like), merocyanines (for example, merocyanine, carbo merocyanine or the like), thiazines (for example, thionine, methylene blue, toluidine blue, or the like), acridines (for example, acridine orange, chloro flavin, acriflavine, and the like), anthraquinones (for example, anthraquinone, or the like), squaryliums (for example, squarylium or the like), coumarins (for example, 7-diethylamino-4-methyl coumarin, or the like), thioxanthones (for example, isopropyl thioxanthone or the like), thiochromanones (for example, thiochromanone or the like), and the like.

Among these, as the sensitizer, thioxanthone is preferable, and isopropyl thioxanthone is more preferable.

Furthermore, one kind of the sensitizer may be used singly, or two or more kinds thereof may be used concurrently.

A total content of the polymerization initiators other than the Component B and the compounds represented by Formulae (1) and (3) is preferably equal to or smaller than 2.0% by mass, more preferably equal to or smaller than 1.0% by mass, and even more preferably equal to or smaller than 0.5% by mass with respect to a total amount of the ink composition. It is particularly preferable for the ink composition not to contain other polymerization initiators.

### (Component D) Surfactant

In order to impart long-term ejection stability to the ink composition of the present invention, a surfactant may be added to the ink-jet ink composition.

Examples of the surfactants include surfactants which are described in each publication of JP1987-173463A (JP-S62-173463A), and JP1987-183457A (JP-S62-183457A). The examples thereof include anionic surfactants such as dialkyl sulfosuccinate salts, alkyl naphthalene sulfonic acid salts, and fatty acid salts; non-ionic surfactants such as polyoxyethylene alkyl ethers, polyoxyethylene alkyl allyl ethers, acetylene glycols, and polyoxyethylene-polyoxypropylene block copolymers; and cationic surfactants such as alkyl amine salts, quaternary ammonium salts, and the like. Moreover, an organic fluoro compound may be used instead of the surfactant. The organic fluoro compounds are preferably hydrophobic. The organic fluoro compounds include, for example, fluorine-based surfactants, oily fluorine-based compounds (for example, fluorine-based oils) and solid fluorine compound resins (for example, tetrafluoroethylene resin), and the examples thereof include those described in each publication of JP1982-9053B (JP-S57-9053B) (columns 8 to 17), and JP1987-135826A(JP-S62-135826A).

A content of the surfactant in the ink composition of the present invention is appropriately set according to the use of the ink composition. However, the content is preferably 0.0001% by mass to 1% by mass with respect to a total mass of the ink composition.

### (Component E) Colorant

In order to improve visibility of the formed image portion, it is preferable for the ink composition of the present invention to contain a colorant. The colorant is not particularly limited, however, pigments and oil-soluble dyes excellent in weather resistance and color reproducibility are preferable, and it is possible to use a colorant which is arbitrarily selected from known soluble dyes and the like. As the colorant, it is preferable to select a compound which does not function as a polymerization initiator, since such a compound does not decrease sensitivity of a curing reaction caused by irradiation of actinic radiation.

The pigments which can be used in the present invention are not particularly limited, and for example, the following numbered organic or inorganic pigments as described in the color index can be used.

According to the purpose, Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, Pigment Orange 13, 16, 20, and 36,can be used as a red or magenta pigment; Pigment Blue 1, 15, 15:1, 15:2, 15:3, 15:4, 15:6, 16, 17-1, 22, 27, 28, 29, 36, and 60 can be used as a blue or cyan pigment; Pigment Green 7, 26, 36, and 50 can be used as a green pigment; Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, and 193 can be used as a yellow pigment; Pigment Black 7, 28, and 26 can be used as a black pigment; and Pigment White 6, 18, and 21 can be used as a white pigment.

In the present invention, it is also possible to use a dispersion dye as long as the dispersion dye dissolves in a hydrophobic organic solvent. The dispersion dye generally includes water-soluble dyes, however, in the present invention, it is preferable to use a dispersion pigment which dissolves in a hydrophobic organic solvent.

Preferable specific examples of dispersion dyes include C. I. and Disperse Yellow 5, 42, 54, 64, 79, 82, 83, 93, 99, 100, 119, 122, 124, 126, 160, 184:1, 186, 198, 199, 201, 204, 224, and 237; C. I. Disperse Orange 13, 29, 31:1, 33, 49, 54, 55, 66, 73, 118, 119 and 163; C. I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C. I. Disperse Violet 33; C. I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; C. I. Disperse Green 6:1 and 9; and the like.

It is preferable for the colorant to be appropriately dispersed in the ink composition after being added to the ink composition. For dispersing the colorant, it is possible to use various dispersion apparatuses such as a ball mill, a sand mill, an attritor, a roll mill, an agitator, a Henschel mixer, a colloid mill, an ultrasonic homogenizer, a pearl mill, a wet jet mill, and a paint shaker.

The colorant may be directly added to the ink composition along with each component when the ink composition is prepared. In addition, in order to improve dispersibility, it is possible to add beforehand the colorant to a dispersion medium such as a solvent or the polymerizable compound used in the present invention, evenly disperse or dissolve the colorant, and then mix the resultant with the ink composition.

In the present invention, in order to avoid deterioration of solvent resistance caused when the solvent remains in the cured image and avoid a problem caused by Volatile Organic Compound (VOC) of the residual solvent, it is preferable for the colorant to be added beforehand to a dispersion medium such as the polymerizable compound and then mixed with the ink composition. Moreover, when only dispersion suitability is taken into consideration, it is preferable to select a low-viscosity monomer as the polymerizable compound which is used in adding the colorant. One, two, or more kinds of the colorant may be appropriately selected and used according to the use of the ink composition.

Here, when a colorant such as a pigment, which stays a solid in the ink composition, is used, it is preferable to select a colorant, a dispersant, and a dispersion medium and to set dispersion conditions and filtration conditions, such that an average particle size of colorant particles preferably becomes 0.005 µm to 0.5 µm, more preferably becomes 0.01 µm to 0.45 µm, and even more preferably becomes 0.015 µm to 0.4 µm. It is preferable to manage the particle size, since clogging of head nozzle is suppressed, and storage stability, transparency, and curing sensitivity of the ink composition can be maintained.

A content of the colorant in the ink composition is appropriately selected according to the color and use thereof, however, the content is preferably 0.01% by mass to 30% by mass with respect to a total mass of the ink composition.

### (Component F) Dispersant

It is preferable for the ink composition of the present invention to contain a dispersant. Particularly, in the case of using a pigment, in order to stably disperse the pigment in the ink composition, it is preferable for the ink composition to contain the dispersant. A polymer dispersant is preferable as the dispersant. Moreover, "polymer dispersant" in the present invention means a dispersant having a weight average molecular weight of equal to or greater than 1,000.

Examples of the polymer dispersant include DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie Co., Ltd.); EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, EFKA7580 (manufactured by EFKA Additives Co., Ltd.); Disperse Aid 6, Disperse Aid 8, Disperse Aid 15, Disperse Aid 9100 (manufactured by San Nopco Co., Ltd.); various SOLSPERSE dispersants such as SOLSPERSE 3000, 5000, 9000, 12000, 13240, 13940, 17000, 22000, 24000, 26000, 28000, 32000, 36000, 39000, 41000, 71000 (manufactured by Noveon, Inc.); Adeka Pluronic L31, F38, L42, L44, L61, L64, F68, L72, P95, F77, P84, F87, P94, L101, P103, F108, L121, P-123 (manufactured by ADEKA Ltd.), Ionetto S-20 (Sanyo Chemical Industries, Ltd.); Disparlon KS-860, 873SN, 874 (polymer dispersant), # 2150 (aliphatic polycarboxylic acid), # 7004 (polyether ester type) (Kusumoto Chemicals, Ltd.), and the like.

A content of the dispersant in the ink composition is appropriately selected according to the intended purpose, however, the content is preferably 0.05% by mass to 15% by mass with respect to A total mass of the ink composition.

### <Other Components>

If necessary, the ink composition of the present invention contains, in addition to each of the components, a co-sensitizer, an ultraviolet absorber, an antioxidant, an anti-fading agent, conductive salts, solvents, a polymer compound, a basic compound, and the like. It is possible to use known components as these other components, and the examples thereof include those described in JP2009-221416A.

In addition, from the viewpoint of storability and suppressing head clogging, it is preferable for the ink composition of the present invention to contain a polymerization inhibitor.

A content of the polymerization inhibitor is preferably 200 ppm to 20,000 ppm with respect to a total mass of the ink composition of the present invention.

Examples of the polymerization inhibitor include nitroso-based polymerization inhibitors, hindered amine-based polymerization inhibitors, hydroquinone, benzoquinone, p-methoxy phenol, TEMPO, TEMPOL, Cuperon Al, and the like.

### <Physical Properties of Ink>

In the present invention, in consideration of the ejection property, it is preferable to use an ink composition having viscosity at 25°C or equal to or lower than 40 mPa·s. The viscosity is more preferably 5 mPa·s to 40 mPa·s, and even more preferably 7 mPa·s to 30 mPa·s. In addition, the viscosity at an ejection temperature (preferably 25°C to 80°C and more preferably 25°C to 50°C) is preferably 3 mPa·s to 15 mPa·s, and more preferably 3 mPa·s to 13 mPa·s. It is preferable to appropriately adjust a compositional ratio of the ink composition of the present invention such that the viscosity falls within the above range. If the viscosity at room temperature (25°C) is set to a high level, even when a porous recording medium (support) is used, it is possible to avoid penetration of the ink composition into the recording medium and to reduce the amount of uncured monomers. Furthermore, at the time of landing of the ink composition droplets, blurring of the ink can be inhibited, and consequentially, the image quality is improved. Therefore, it is preferable to set the viscosity to a high level.

The surface tension of the ink composition of the present invention at 25°C is preferably from 20 mN/m to 40 mN/m, more preferably from 20.5 mN/m to 35.0 mN/m, even more preferably from 21 mN/m to 30.0 mN/m, and particularly preferably from 21.5 mN/m to 28.0 mN/m. If the surface tension is within the above range, a printed matter which is excellent in blocking resistance is obtained.

Moreover, it is possible to use a known method as the measurement method of the surface tension of the ink composition at 25°C. However, it is preferable to measure the surface tension by using a wheel suspension method or the Wilhelmy method. Preferable examples of the method include a method where measurement is performed using an automatic surface tension meter CBVP-Z manufactured by Kyowa Interface Science Co., Ltd., or a method where measurement is performed using SIGMA702 manufactured by KSV Instruments Ltd.

### (Ink Jet Recording Method, Ink Jet Recording Apparatus, and Printed Matter)

The ink jet recording method of the present invention is a method in which the ink jet ink composition of the present invention is ejected onto a recording medium (a support, a recording material, or the like) for ink jet recording, the ink jet ink composition, which has been ejected onto the recording medium, is cured by being irradiated with actinic energy rays so as to form an image.

More specifically, the ink jet recording method of the present invention preferably includes (a¹) a step of ejecting an ink jet ink composition of the present invention onto a recording medium, and (b¹) a step of curing the ejected ink-jet ink composition by irradiating the ink jet ink composition with actinic rays.

The ink jet recording method of the present invention includes the steps (a¹) and (b¹), and as a result, an image made of the cured ink composition is formed on the recording medium.

In addition, the ink jet recording method of the present invention is preferably performed by performing the steps (a¹) and (b¹) twice or more, that is, by a multi-pass mode in which printing is performed on the same part by overstriking. In a case where printing is performed by the multi-pass mode by using the ink composition of the present invention, an image having more excellent glossiness is obtained.

In addition, the printed matter of the present invention is a printed matter which is recorded by the ink jet recording method of the present invention.

In addition, the ink composition of the present invention is suitable for package printing, and particularly suitable for package printing for food packaging. In this case, the ink jet recording method which includes the following steps in this order is preferable.
(Step a) A step of performing printing on a support for package that has a film thickness of equal to or smaller than 150 µm by ejecting the ink jet ink composition from an ink jet head, and
(Step b) A step of irradiating the ejected ink-jet ink composition with actinic rays.

In the steps (a¹) and (a) in the ink jet recording method of the present invention, it is possible to use an ink jet recording apparatus which will be described in detail below.

### <Ink jet Recording Apparatus>

The ink jet recording apparatuses which can be used in the ink jet recording method of the present invention are not particularly limited and a well-known ink jet recording apparatus capable of achieving intended resolution can be arbitrarily selected and used. That is, with known ink jet recording apparatuses including commercially available products, ejection of the ink composition onto the recording medium can be performed in the steps (a¹) and (a) of the ink jet recording method of the present invention.

Examples of the ink jet recording apparatus which can be used in the present invention include apparatuses including, for example, ink supply systems, temperature sensors, and actinic energy ray sources.

The ink supply system is formed of, for example, a source tank including the ink composition of the present invention, a supply pipe, an ink supply tank immediately before the ink jet head, a filter and a piezo-type ink jet head. The piezo-type ink jet head is capable of driving so as to be able to eject multi-size dots of preferably 1 pl to 100 pl and more preferably 8 pl to 30 pl, at a resolution of preferably 320 x 320 dpi to 4,000 x 4,000 dpi, more preferably 400 x 400 dpi to 1,600 x 1,600 dpi, and even more preferably 720 x 720 dpi. Moreover, the dpi in the present invention represents the number of dots per 2.54 cm.

As described above, regarding the ink composition of the present invention, it is preferable that the ink composition to be ejected be set to a constant temperature. Therefore, it is preferable for the inkjet recording apparatus to be equipped with means for stabilizing the ink composition temperature. The piping system from the ink tank (the intermediary tank in a case where there is an intermediary tank) to the nozzle emission surface and all of the members are sites to be set to a constant temperature. That is, insulation and heating can be performed from the ink supply tank to the ink jet head portion.

The temperature control method is not particularly limited. However, for example, it is preferable to provide a plurality of temperature sensors in sites at each pipe, and perform heating control according to the flow amount of the ink composition and the temperature of the environment. The temperature sensors can be provided in the vicinity of the nozzles of the ink supply tank and the ink jet head. In addition, the head unit to be heated is preferably thermally blocked or insulated in order that the apparatus main body is not influenced by the temperature from the outside air. To shorten the time for driving a printer that is required for heating or to reduce the loss of thermal energy, it is preferable to insulate the heat unit from the other sites and to reduce the thermal capacity of the entire heating unit.

Radiation-curable type ink compositions such as the ink composition of the present invention have large changes in viscosity due to temperature changes during ejection since the viscosity is generally higher than aqueous ink compositions which are used in ink compositions for normal ink jet recording. The changes in the viscosity of the ink composition are greatly influenced by changes in the droplet size and changes in the droplet ejection speed, and can lead to deterioration of the image quality. Accordingly, there is a need to keep the temperature of the ink composition at the time of ejection constant as much as possible. Thus, in the present invention, it is suitable that the control band of the temperature of the ink composition be preferably a set temperature ±5°C, more preferably a set temperature ±2°C, and even more preferably a set temperature ±1°C.

Next, the steps (b¹) and (b) will be described.

The ink composition, which has been ejected onto the recording medium, is cured by being irradiated with actinic energy rays (actinic rays). This is because the radical polymerization initiator included in the ink composition of the present invention is dissolved by the irradiation of the actinic energy rays, the polymerization initiating species such as a radical, or the like is generated, and the polymerization reaction of the polymerizable compound is started and promoted by the functions of the initiating species. At this time, if a polymerization initiator and a sensitizer are present in the ink composition, the sensitizer in the system absorbs actinic energy rays and enters an excited state, the dissolution of the polymerization initiator is promoted by the contact with the polymerization initiator, and a curing reaction of higher sensitivity can be achieved.

Here, α-rays, γ-rays, electron beams, X-rays, ultraviolet rays, visible rays, infrared light, or the like can be used as the actinic energy rays to be used. The peak wavelength of the actinic energy rays depend on the absorption characteristics of the sensitizer, however, for example, 200 nm to 600 nm is preferable, 300 nm to 450 nm is more preferable, 320 nm to 420 nm is even more preferable, and actinic energy rays which are ultraviolet rays where the peak wavelength is in a range 340 nm to 400 nm are particularly preferable.

In addition, the polymerization initiation system of the ink composition of the present invention has sufficient sensitivity even with low output actinic energy rays. Therefore, the curing is suitably performed with the exposed surface illuminance preferably at 10 mW/cm² to 4,000 mW/cm², and more preferably at 20 mW/cm² to 2,500 mW/cm².

As the actinic energy ray source, a mercury lamp, a gas or solid-state laser, or the like is mainly used, and, as the light source used in the curing of the ink composition for ultraviolet ray photocurable-type ink jet recording, mercury lamps and metal halide lamps are widely known. However, currently, a move toward becoming mercury free is strongly desirable from the point of view of protecting the environment and replacement with GaN-based semiconductor ultraviolet light-emitting devices is extremely effective, industrially and environmentally. In addition, LED (UV-LED) and LD (UV-LD) are compact, have a long life, high efficiency, and low cost and are anticipated as light sources for photocurable type ink jets.

In addition, a light emitting diode (LED) and a laser diode (LD) can be used as the actinic energy ray source. In particular, in a case where an ultraviolet source is required, an ultraviolet LED and an ultraviolet LD can be used. For example, NICHIA CORPORATION has marketed a violet LED of which a main emission spectrum has wavelengths between 365 nm to 420 nm. Furthermore, in a case where an even shorter wavelength is necessary, the specification of US6,084,250A discloses an LED capable of emitting actinic energy rays placed in the center between 300 nm and 370 nm. In addition, other ultraviolet LEDs are available and can irradiate actinic rays having wavelengths of different ultraviolet ray bands. In the present invention, UV-LEDs are particularly preferable actinic energy ray sources, and a UV-LED having a peak wavelength in 340 nm to 400 nm is particularly preferable.

In addition, the maximum illuminance of the LED on the recording medium is preferably 10 mW/cm² to 2,000 mW/cm², more preferably 20 mW/cm² to 1,000 mW/cm², and particularly preferably 50 mW/cm² to 800 mW/cm².

It is appropriate for the ink composition of the present invention to be irradiated with such actinic energy rays preferably for 0.01 seconds to 120 seconds and more preferably for 0.1 seconds to 90 seconds.

The irradiation conditions of the actinic energy rays and the basic irradiation method are disclosed in JP1985-132767A (JP-S60-132767A). More specifically, light sources are provided on both sides of the head unit including the ejection apparatus of the ink composition and are operated by scanning the head unit and the light sources using a so-called shuttle system. The irradiation of the actinic energy rays is performed for a certain time (preferably 0.01 to 0.5 seconds, more preferably 0.01 to 0.3 seconds, and even more preferably 0.01 to 0.15 seconds) after the landing of the ink composition. By controlling the time from the landing of the ink composition to the irradiation in this manner to be an extremely short time, the ink composition landed on the recording medium can be prevented from blurring before curing. In addition, since exposure can be performed before the ink composition penetrates to a deep portion where the light source does not reach even with respect to a porous recording medium, the residue of the unreacted monomer can be suppressed, which is preferable.

Furthermore, the curing may be completed by another light source unaccompanied by driving. In addition, a method using optical fiber and a method where a collimated light is incident on a mirror surface provided on a head unit side surface, and a recorded area is irradiated with the reflection light. Such curing methods can also be applied to the ink jet recording method of the present invention.

By adopting the ink jet recording method as described above, even with respect to various recording media for which the wettability of the surfaces are different, the dot diameter of the landed ink composition can be kept constant and the image quality can be improved. In addition, in order to obtain a color image, it is preferable that colors be superimposed in order of low brightness. By superimposing the colors in order of ink compositions with low brightness, the radiation rays reach the ink composition of the lower part more easily, and favorable curing sensitivity, a reduction in the monomer residue, and an improvement in the adhesion can be expected. Further, with the irradiation, all the colors can be ejected and exposed together, however, exposing one color at a time is preferable from the point of view of curing promotion.

In this manner, by curing the ink composition of the present invention with high sensitivity using the irradiation of actinic energy rays, an image can be formed on the recording medium surface.

The ink composition of the present invention is preferably used as an ink set formed of a plurality of inks for ink jet recording.

In the ink jet recording method of the present invention, the order of each of the colored ink compositions to be ejected is not particularly limited, however, it is preferable to start application to the recording medium from the colored ink compositions with high brightness, and in a case of using yellow, cyan, magenta, and black, it is preferable to perform the application onto the recording medium in the order of yellow, cyan, magenta, and black. In addition, in a case where white is added to the above, it is preferable to perform the application onto the recording medium in the order of white, yellow, cyan, magenta, and black. Furthermore, the present invention is not limited thereto and it is possible to preferably use the ink set of the present invention where at least a total of 7 colors are included with yellow, light cyan, light magenta, cyan, magenta, black, and white ink compositions and in such a case, it is preferable to perform the application onto the recording medium in the order of white, light cyan, light magenta, yellow, cyan, magenta, and black.

In the present invention, the recording medium is not particularly limited, and it is possible to use known recording media as a support or a recording material. The examples thereof include paper, paper on which plastic (for example, polyethylene, polypropylene, and polystyrene) was laminated, a metal plate (for example, aluminum, zinc, and copper), a plastic film (for example, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, and polyvinyl acetal), and paper or a plastic film on which the aforementioned metals were laminated or deposited. In addition, it is possible to suitably use a non-absorbing recording medium as the recording medium of the present invention.

In particular, in a case where the ink composition of the present invention is used in package printing, a recording medium having a comparatively thin film thickness is preferably used as the recording medium, and the film thickness is preferably equal to or smaller than150 µm, more preferably equal to or smaller than 120 µm, even more preferably equal to or smaller than 90 µm, and particularly preferably equal to or smaller than 50 µm. In the ink composition of the present invention, the problem of shrinkage is suppressed even when a recording medium having a comparatively thin film thickness is used.

In a case of being used in package printing, examples of the recording medium include polypropylene, PET, nylon, polyethylene, and polyvinyl alcohol, and polypropylene, PET, and nylon are preferable.

### [Examples]

The present invention will be described in detail by examples and comparative examples shown below. However, the present invention is not limited to the examples. Moreover, unless otherwise specified, "part(s)" in the following description indicates "parts by mass".

The materials which were used in the present invention are as follows.

### (Colorant)

· IRGALITTE BLUE GLVO (cyan pigment, manufactured by BASF Japan Co., Ltd.)
· CINQUASIA MAGENTA RT-355-D (magenta pigment, manufactured by BASF Japan Co., Ltd.)
· NOVOPERM YELLOW H2G (yellow pigment, manufactured by Clariant Co., Ltd.)
· SPECIAL BLACK 250 (black pigment, manufactured by BASF Japan Co., Ltd.)
· Tipaque CR60-2 (white pigment, manufactured by Ishihara Sangyo Kaisha, Ltd.)

### (Dispersant)

- SOLSPERSE 32000 (dispersant manufactured by Noveon Inc.)
- SOLSPERSE 36000 (dispersant manufactured by Noveon Inc.)

### (Monomer)

- SR 306H (tripropylene glycol diacrylate, manufactured by Sartomer Co., Ltd.)
- SR 341 (3-methyl-1,5-pentanediol diacrylate, manufactured by Sartomer Co., Ltd.)
- NK Ester A-NOD-N (1,9-nonanediol diacrylate (manufactured by SHIN-NAKAMURA CHEMICAL CO., LTD.))
- CD 595 (1,10-decanediol diacrylate, manufactured by Sartomer Co., Ltd.)
- CD 262 (1,12-dodecanediol diacrylate, manufactured by Sartomer Co., Ltd.)
- SR 9003 (PO-modified neopentyl glycol diacrylate, manufactured by Sartomer Co., Ltd.)
- SR 339 (phenoxyethyl acrylate, manufactured by Sartomer Co., Ltd.)
- SR 350 (trimethylolpropane triacrylate, manufactured by Sartomer Co., Ltd.)
- V-CAP (N-vinyl caprolactam, manufactured by ISP Corp.)

### (Polymerization Initiator)

· ESACURE 1001M (1-[4-(4-benzoyl phenyl sulfonyl)phenyl]-2-methyl-2-(4-methyl phenyl sulfonyl)propan-1-one, manufactured by Lamberti S.p.A.)
IRGACURE 369
(2-benzyl-2-dimethylamono-1-(4-morpholinophenyl)butanon-1-one, manufactured by BASF Corp.)
· IRGACURE 819 (bis(2,4,6-trimethyl benzoyl)phenyl phosphine oxide, manufactured by BASF Corp.)
· SPEEDCURE 7010 (Compound I-B, manufactured by Lambson limited)
· SPEEDCURE 7040 (polyamine compound, Compound I-N, manufactured by Lambson limited)
· OMNIPOL BP (Compound I-F, polybutylene glycol bis(4-benzoylphenoxy)acetate, manufactured by Rahn AG)
· SPEEDCURE ITX (isopropyl thioxanthone, manufactured by Lambson limited)
· IRGACURE 184 (1-hydroxycyclohexyl phenyl ketone, manufactured by BASF Corp.)
· IRGACURE 907 (2-methyl-1-[4-(methylthio)phenyl]-2-morpholinopropanon-1-one, manufactured by BASF Corp.)

### (Oligomer)

· CN964 A85 (containing difunctional aliphatic urethane acrylate · 15% by weight tripropylene glycol diacrylate, manufactured by Sartomer Co., Ltd.)

### (Polymerization inhibitor)

FIRSTCURE ST-1 (ST-1, polymerization inhibitor, mixture of tris(N-nitroso-N-phenylhydroxyamine) aluminum salt (10% by mass) and phenoxyethyl acrylate (90% by mass), manufactured by Chem First Co., Ltd.)

### (Surfactant)

· BYK307 (silicone-based surfactant, manufactured by BYK Chemie Co., Ltd.)

### <Preparation of Cyan Mill Base A>

300 parts by mass of IRGALITTE BLUE GLVO, 620 parts by mass of SR9003, and 80 parts by mass of SOLSPERSE 32000 were mixed together by stirring, whereby a cyan mill base A was obtained. Moreover, the preparation of the cyan mill base A was performed by putting the respective components into a disperser motor mill M50 (manufactured by Eiger Corp.) and dispersing the components for 4 hours at a circumferential speed of 9 m/s by using zirconia beads having a diameter of 0.65 mm.

### <Preparation of Each of Mill Bases B to E>

In the same manner as the cyan mill base A, a magenta mill base B, a yellow mill base C, a black mill base D, and a white mill base E were prepared with the compositions and dispersion conditions shown in Table 1, respectively.

**[Table 1]**

| Mill base | | Cyan mill base A | Magenta mill base B | Yellow mill base C | Black mill base D | White mill base E |
|---|---|---|---|---|---|---|
| | IRGALITE BLUE GLVO | 300 | - | - | - | - |
| | CINQUASIA MAGENTA RT-355-D | - | 300 | - | - | - |
| Composition (parts) | NOVOPERM YELLOW H2G | - | - | 300 | - | - |
| | SPECIAL BLACK 250 | - | - | - | 400 | - |
| | TIPAQUE CR60-2 | - | - | - | - | 500 |
| | SR9003 | 620 | 600 | 600 | 520 | 440 |
| | SOLSPERSE 32000 | 80 | 100 | 100 | 80 | 60 |
| Dispersion condition | Circumferential speed (m/s) | 9 | 9 | 9 | 9 | 9 |
| | Time (hours) | 4 | 10 | 10 | 7 | 4 |

(Examples 1 to 24 and Comparative Examples 1 to 5)

### <Method of Manufacturing Ink Composition>

Each of the ink compositions was obtained by mixing and stirring the material which are described in Tables 2 to 6. Here, "-" in the table has the meaning that the corresponding component is not added.

### <Ink Jet Recording Method>

An ink jet image was printed using a UV curable ink jet printer LUXELJET UV250 (manufactured by FUJIFILM Graphic Systems Co., Ltd.).

A 100% solid image was printed on a Pylen film-OT P3162 (manufactured by Toyobo Co., Ltd., A4 size, polypropylene sheet, thickness of 40 µm) with a resolution of 600 dpi x 450 dpi. Moreover, the apparatus is an apparatus in which drawing is performed by scanning an ink jet head, a UV lamp is mounted on each of both ends of the head, and has a configuration in which UV is irradiated twice whenever the head performs scanning once. The solid image was formed by alternately repeating 8 times ejection of ink droplets and UV irradiation with the two lamps at the same position of the support. As the lamps, a SUB ZERO 085 H bulb lamp unit manufactured by Integration Technology Inc. was mounted, and lamp intensity before and after was set to a level 3.

When the exposed surface illuminance was measured during printing, the measured value was 980 mW/cm². In addition, the time to an exposure from a discharge was 0.2 seconds to 0.3 seconds. In addition, in printing, the discharging amount per drop was in the range of 6 pL to 42 pL.

### <Evaluation Method of Migration>

10 mL of a mixed liquid consisting of water :ethanol = 70 :30 was added dropwise onto the surface of a printed matter, the entire printed matter was placed into a airtight container made of glass so as not to volatize the mixed solvent and left to stand for 10 days at 40°C. Thereafter, the total elution amount (overall migration volume: OML) from the printed matter that was contained in the water-ethanol mixture was calculated and evaluated on a scale of 1 to 5. Moreover, the measurement of the total elution amount was performed by volatizing the water-ethanol mixture solvent after extraction and measuring the mass of the remaining components.
5: Elution amount is equal to or smaller than 1 ppm/dm²
4: Elution amount is greater than 1 ppm/dm² but equal to or smaller than 20 ppm/dm²
3: Elution amount is greater than 20 ppm/dm² but equal to or smaller than 100 ppm/dm²
2: Elution amount is greater than 100 ppm/dm² but equal to or smaller than 1,000 ppm/dm²
1: Elution amount is greater than 1,000 ppm/dm².

### <Odor Evaluation Method>

The image, which was obtained by the aforementioned ink jet recording method, was put in a 30 cm x 30 cm plastic bag with a zip and left to stand for 24 hours.

Thereafter, the zip was opened, and the odor was evaluated. For the evaluation, results obtained from 10 people were averaged.
5: Practically odorless
4: A slight odor, but hardly noticeable
3: A certain amount of odor, but not an uncomfortable level
2: A strong odor
1: A very strong odor

### <Evaluation of Blocking Resistance >

By the aforementioned ink jet recording method, a total of 5 sheets of printed matters were created. Thereafter, the obtained images were stacked on one another, a 5 kg weight was placed on top, and then the images were left to stand for 24 hours in an oven at 30°C. Subsequently, a degree of sticking among images was evaluated.
5: Sticking did not occur among the printed matters.
4: The printed matters stuck together but can be easily pulled apart by hand, and there was no transfer of the image to the rear surface of the support of the upper section.
3: The printed matters stuck together. When the printed matters were pulled apart by hand without care, there was slight transfer of the image to rear surface of the support of the upper section.
2: The printed matters stuck together. When the printed matters were pulled apart by hand without care, there was serious transfer of the image to the rear surface of the support of the upper section.
1: The printed matters stuck together, and it was difficult to pull them apart by hand.

### <Evaluation of Curability>

A swab was immersed in isopropyl alcohol (IPA), and the surface of printed matter was rubbed with the swab. Moreover, the number of times of the rubbing performed until the support was exposed was counted.
5: More than 50 times
4: More than 30 times but equal to or smaller than 50 times
3: More than 10 times but equal to or smaller than 30 times
2: More than 5 times but equal to or smaller than 10 times
1: Equal to or smaller than 5 times

### <Shrinkage Test>

After printing, the printed matter was left to stand for 30 minutes at room temperature (25°C), and a degree of curling of the printed matter was observed and evaluated.
5: Curl was not observed at all, and the printed matter was flat.
4: Curl was slightly observed.
3: Curl was observed, but when being pulled by hand, the printed matter became flat.
2: Curl was observed, and even when being pulled by hand, the printed matter was uneven.
1: The printed matter violently curled, and even when being pulled by hand, the printed matter was uneven.

The evaluation results of the ink compositions of Examples 1 to 24 and Comparative Examples 1 to 5 are shown in Tables 2 to 6.

**[Table 2]**

| | | Example | | | | | | | |
|---|---|---|---|---|---|---|---|---|---|
| | | 1 | 2 | 3 | 4 | 5 | 6 | 7 | 8 |
| | Tripropylene glycol diacrylate | 30.0 | 42.8 | 46.8 | 60.8 | 38.8 | 30.0 | 30.0 | 30.0 |
| | 3-Methyl pentanediol diacrylate | 50.8 | 30.0 | 30.0 | 20.0 | 20.0 | - | - | - |
| Component A | 1,9-Nonanediol diacrylate | - | - | - | - | - | 50.8 | - | - |
| | 1,10-Decanediol diacrylate | - | - | - | - | - | - | 50.8 | - |
| | 1,12-Dodecanediol diacrylate | - | - | - | - | - | - | - | 50.8 |
| Other Monomers | Phenoxyethyl acrylate | - | - | - | - | - | - | - | - |
| | N-vinyl | - | - | - | - | - | - | - | - |
| Component B | ESACURE 1001M molecular weight 514 | 3.0 | 3.0 | 3.0 | 3.0 | 3.0 | 3.0 | 3.0 | 3.0 |
| Component C | SPEEDCURE 7010 molecular weight 1899 | 4.0 | 4.0 | 4.0 | 4.0 | 4.0 | 4.0 | 4.0 | 4.0 |
| Other polymerization initiator | SPEEDCURE 7040 molecular weight 1066 | 4.0 | 4.0 | 4.0 | 4.0 | 4.0 | 4.0 | 4.0 | 4.0 |
| | Cyan mill base | 8.0 | - | - | - | - | 8.0 | 8.0 | 8.0 |
| | Magenta mill base | - | 16.0 | - | - | - | - | - | - |
| Mill base | Yellow mill base | - | - | 12.0 | - | - | - | - | - |
| | Black mill base | - | - | - | 8.0 | - | - | - | - |
| | White mill base | - | - | - | - | 30.0 | - | - | - |
| Polymerization inhibitor | ST-1 | 0.1 | 0.1 | 0.1 | 0.1 | 0.1 | 0.1 | 0.1 | 0.1 |
| Surfactant | BYK307 | 0.1 | 0.1 | 0.1 | 0.1 | 0.1 | 0.1 | 0.1 | 0.1 |
| Total (parts by mass) | | 100.0 | 100.0 | 100.0 | 100.0 | 100.0 | 100.0 | 100.0 | 100.0 |
| | Migration | 4 | 4 | 4 | 4 | 4 | 4 | 3 | 3 |
| | Odor | 4 | 4 | 4 | 4 | 4 | 4 | 4 | 4 |
| Evaluation result | Shrinkage | 5 | 5 | 5 | 5 | 5 | 5 | 5 | 5 |
| | Blocking resistance | 5 | 5 | 5 | 5 | 5 | 4 | 4 | 3 |
| | Curability | 5 | 5 | 5 | 5 | 5 | 5 | 5 | 5 |

**[Table 3]**

| | | Example | | | | | | | |
|---|---|---|---|---|---|---|---|---|---|
| | | 1 | 9 | 10 | 11 | 12 | 13 | 14 | 15 |
| Component A | Tripropylene glycol diacrylate | 30.0 | 30.0 | 30.0 | 70.8 | 50.8 | 40.8 | 10.0 | - |
| | 3-Methyl pentanediol diacrylate | 50.8 | - | - | - | - | - | 50.0 | 50.0 |
| | PO-modified neopentyl glycol diacrylate | - | 50.8 | - | - | - | - | - | 30.8 |
| | Trimethylol propane triacrylate | - | - | 50.8 | - | - | - | 20.8 | - |
| | CN964 A85 (urethane acrylate oligomer) | - | - | - | 10.0 | - | - | - | - |
| Other monomer | Phenoxyethyl acrylate | - | - | - | - | 20.0 | 30.0 | - | - |
| | N-vinyl caprolactam | - | - | - | - | 10.0 | 10.0 | - | - |
| Component B | ESACURE 1001M molecular weight 514 | 3.0 | 3.0 | 3.0 | 3.0 | 3.0 | 3.0 | 3.0 | 3.0 |
| Component C | SPEEDCURE 7010 molecular weight 1899 | 4.0 | 4.0 | 4.0 | 4.0 | 4.0 | 4.0 | 4.0 | 4.0 |
| Other polymerization initiator | SPEEDCURE 7040 molecular weight 1066 | 4.0 | 4.0 | 4.0 | 4.0 | 4.0 | 4.0 | 4.0 | 4.0 |
| Mill base | Cyan mill base | 8.0 | 8.0 | 8.0 | 8.0 | 8.0 | 8.0 | 8.0 | 8.0 |
| | Magenta mill base | - | - | - | - | - | - | - | - |
| | Yellow mill base | - | - | - | - | - | - | - | - |
| | Black mill base | - | - | - | - | - | - | - | - |
| | White mill base | - | - | - | - | - | - | - | - |
| Polymerization inhibitor | ST-1 | 0.1 | 0.1 | 0.1 | 0.1 | 0.1 | 0.1 | 0.1 | 0.1 |
| Surfactant | BYK307 | 0.1 | 0.1 | 0.1 | 0.1 | 0.1 | 0.1 | 0.1 | 0.1 |
| Total (parts by mass) | | 100.0 | 100.0 | 100.0 | 100.0 | 100.0 | 100.0 | 100.0 | 100.0 |
| Evaluation result | Migration | 4 | 4 | 4 | 4 | 4 | 3 | 4 | 4 |
| | Odor | 4 | 4 | 4 | 4 | 3 | 4 | 4 | 4 |
| | Shrinkage | 5 | 5 | 3 | 5 | 5 | 5 | 5 | 5 |
| | Blocking resistance | 5 | 5 | 5 | 5 | 4 | 4 | 5 | 5 |
| | Curability | 5 | 5 | 5 | 5 | 5 | 4 | 5 | 5 |

**[Table 4]**

| | | Example | | | | | |
|---|---|---|---|---|---|---|---|
| | | 1 | 16 | 17 | 18 | 19 | 20 |
| Component A | Tripropylene glycol diacrylate | 30.0 | 30.0 | 30.0 | 30.0 | 30.0 | 30.0 |
| | 3-Methyl pentanediol diacrylate | 50.8 | 52.8 | 48.8 | 53.5 | 53.2 | 49.8 |
| Component B | ESACURE 1001M molecular weight 514 | 3.0 | 1.0 | 5.0 | 0.3 | 0.6 | 4.0 |
| Component C | SPEEDCURE 7010 (Compound I-B) molecular weight 1899 | 4.0 | 4.0 | 4.0 | 4.0 | 4.0 | 4.0 |
| Other polymerization initiator | SPEEDCURE 7040 molecular weight 1066 | 4.0 | 4.0 | 4.0 | 4.0 | 4.0 | 4.0 |
| | SPEEDCURE ITX molecular weight 254 | - | - | - | - | - | - |
| | IRGACURE 184 molecular weight 204 | - | - | - | - | - | - |
| Mill base | Cyan mill base | 8.0 | 8.0 | 8.0 | 8.0 | 8.0 | 8.0 |
| Polymerization inhibitor | ST-1 | 0.1 | 0.1 | 0.1 | 0.1 | 0.1 | 0.1 |
| Surfactant | BYK307 | 0.1 | 0.1 | 0.1 | 0.1 | 0.1 | 0.1 |
| Total (parts by mass) | | 100.0 | 100.0 | 100.0 | 100.0 | 100.0 | 100.0 |
| Evaluation result | Migration | 4 | 3 | 4 | 3 | 3 | 4 |
| | Odor | 4 | 4 | 4 | 3 | 4 | 4 |
| | Shrinkage | 5 | 5 | 5 | 5 | 5 | 5 |
| | Blocking resistance | 5 | 5 | 5 | 5 | 5 | 5 |
| | Curability | 5 | 5 | 5 | 3 | 4 | 5 |

**[Table 5]**

| | | Example | | | | |
|---|---|---|---|---|---|---|
| | | 1 | 21 | 22 | 23 | 24 |
| Component A | Tripropylene glycol diacrylate | 30.0 | 30.0 | 30.0 | 30.0 | 30.0 |
| | 3-Methyl pentanediol diacrylate | 50.8 | 50.8 | 51.7 | 50.3 | 50.8 |
| Component B | ESACURE 1001M molecular weight 514 | 3.0 | 3.0 | 3.0 | 3.0 | 3.0 |
| Component C | SPEEDCURE 7010 (I-B) molecular weight 1899 | 4.0 | 3.0 | 3.0 | 4.0 | - |
| | OMNIPOL BP molecular weight 960 | - | - | - | - | 4.0 |
| Other polymerization initiator | SPEEDCURE 7040 molecular weight 1066 | 4.0 | 4.0 | 4.0 | 4.0 | 4.0 |
| | SPEEDCURE ITX molecular weight 254 | - | 1.0 | 0.1 | - | - |
| | IRGACURE 184 molecular weight 204 | - | - | - | 0.5 | - |
| Mill base | Cyan mill base | 8.0 | 8.0 | 8.0 | 8.0 | 8.0 |
| Polymerization inhibitor | ST-1 | 0.1 | 0.1 | 0.1 | 0.1 | 0.1 |
| Surfactant | BYK307 | 0.1 | 0.1 | 0.1 | 0.1 | 0.1 |
| Total (parts by mass) | | 100.0 | 100.0 | 100.0 | 100.0 | 100.0 |
| Evaluation result | Migration | 4 | 3 | 4 | 3 | 4 |
| | Odor | 4 | 4 | 4 | 4 | 4 |
| | Shrinkage | 5 | 5 | 5 | 5 | 5 |
| | Blocking resistance | 5 | 5 | 5 | 5 | 5 |
| | Curability | 5 | 5 | 5 | 5 | 5 |

**[Table 6]**

| | | Example | Comparative Example | | | | |
|---|---|---|---|---|---|---|---|
| | | 1 | 1 | 2 | 3 | 4 | 5 |
| Component A | Tripropylene glycol diacrylate | 30.0 | - | 30.0 | 30.0 | 30.0 | 30.0 |
| | 3-Methyl pentanediol diacrylate | 50.8 | - | 54.8 | 52.8 | 56.3 | 58.8 |
| Other monomer | Phenoxyethyl acrylate | - | 25.0 | - | - | - | - |
| | N-vinyl caprolactam | - | 55.8 | - | - | - | - |
| Component B | ESACURE 1001M molecular weight 514 | 3.0 | 3.0 | 3.0 | - | - | 3.0 |
| Component C | SPEEDCURE 7010 molecular weight 1899 | 4.0 | 4.0 | - | - | - | - |
| Other polymerization initiator | SPEEDCURE 7040 molecular weight 1066 | 4.0 | 4.0 | - | - | - | - |
| | IRGACURE 819 molecular weight 418 | - | - | - | - | 5.0 | - |
| | SPEEDCURE ITX molecular weight 254 | - | - | 4.0 | 3.0 | 0.5 | - |
| | IRGACURE 184 molecular weight 204 | - | - | - | 3.0 | - | - |
| | IRGACURE 907 molecular weight 279 | - | - | - | 3.0 | - | - |
| Mill base | Cyan mill base | 8.0 | 8.0 | 8.0 | 8.0 | 8.0 | 8.0 |
| Polymerization inhibitor | ST-1 | 0.1 | 0.1 | 0.1 | 0.1 | 0.1 | 0.1 |
| Surfactant | BYK307 | 0.1 | 0.1 | 0.1 | 0.1 | 0.1 | 0.1 |
| Total | (parts by mass) | 100.0 | 100.0 | 100.0 | 100.0 | 100.0 | 100.0 |
| Evaluation result | Migration | 4 | 1 | 1 | 1 | 2 | 2 |
| | Odor | 4 | 1 | 4 | 1 | 3 | 2 |
| | Shrinkage | 5 | 5 | 4 | 5 | 5 | 5 |
| | Blocking resistance | 5 | 2 | 4 | 5 | 3 | 2 |
| | Curability | 5 | 1 | 4 | 5 | 3 | 2 |

## Claims

1. An ink-jet ink composition comprising:
(Component A) a polyfunctional (meth)acrylate compound;
(Component B) 1-[4-(4-benzoylphenylsulfanyl)phenyl]-2-methyl-2-(4-methylphenylsulfonyl)propan-1-one; and
(Component C) a compound represented by the following Formula (1) or Formula (2),
wherein a content of polymerization initiator having a molecular weight of less than 340 is equal to or smaller than 1.0% by mass with respect to a total amount of the ink composition, 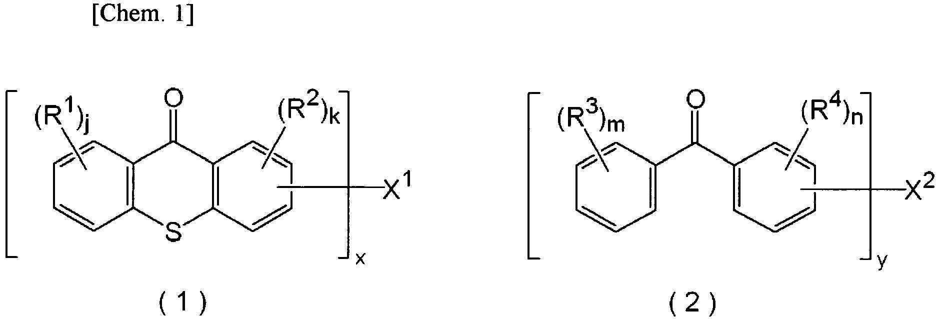
in Formula (1) and Formula (2), each of R¹, R², R³, and R⁴ independently represents an alkyl group having 1 to 5 carbon atoms or represents a halogen atom; each of x and y independently represents an integer from 2 to 4; each of j and m independently represents an integer from 0 to 4; each of k and n independently represents an integer from 0 to 3; when j, k, m, and n are an integer of equal to or greater than 2, plural R¹s, R²s, R³ₛ, and R⁴s may be the same as or different from each other; X¹ represents an x-valent linking group containing at least one of the hydrocarbon chain, ether bond, and ester bond; and X² represents a y-valent linking group containing at least one of the hydrocarbon chain, ether bond, and ester bond.

2. The ink-jet ink composition according to claim 1, comprising:
the compound represented by Formula (1); and
the compound represented by Formula (2).

3. The ink-jet ink composition according to claim 1 or 2,
wherein the Component A includes a bifunctional acrylate monomer.

4. The ink-jet ink composition according to claim 3, comprising at least one kind of the bifunctional acrylate monomer in an amount of 20% by mass to 80% by mass with respect to a total amount of the ink composition.

5. The ink-jet ink composition according to any one of claims 1 to 4,
wherein the compound represented by Formula (1) is a compound represented by Formula (1'), and the compound represented by Formula (2) is a compound represented by Formula (2'); 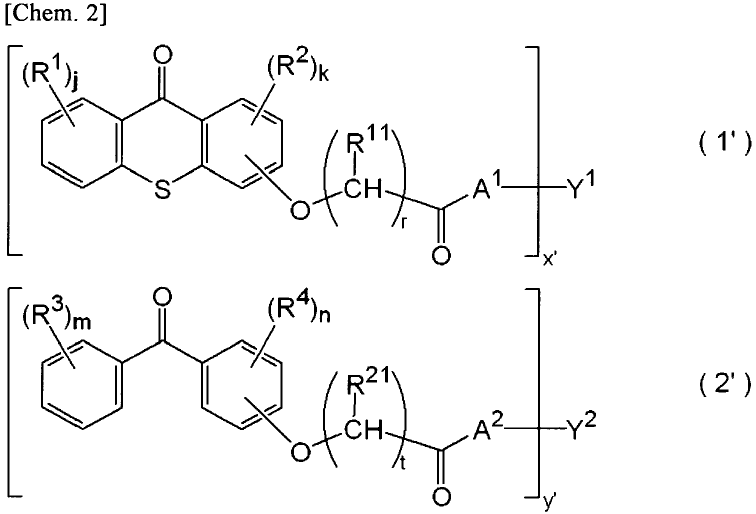 in Formula (1'), R¹, R², j, and k have the same definition as R¹, R², j, and k in Formula (1) respectively; each R¹¹ independently represents a hydrogen atom or an alkyl group having 1 to 4 carbon atoms; each r independently represents an integer from 1 to 6; x' represents an integer from 2 to 4; Y¹ represents a residue which is formed when hydrogen atoms of at least two hydroxy groups are removed from a polyhydroxy compound having 2 to 4 hydroxy groups; A¹ represents at least one group selected from a group consisting of the following (i) to (iii); R³, R⁴, m, and n in Formula (2') have the same definition as R³, R⁴, m, and n in Formula (2) respectively; each R²¹ independently represents an hydrogen atom or an alkyl group having 1 to 4 carbon atoms; each t independently represents an integer from 1 to 6; y' represents an integer from 2 to 4; Y² represents a residue which is formed when hydrogen atoms of at least two hydroxy groups are removed from a polyhydroxy compound having 2 to 4 hydroxy groups; and A² represents at least one group selected from a group consisting of the following (i) to (iii),
[Chem. 3]
*-[O(CHR¹²CHR¹³)ₐ]_{d}-** (i)
*-[O(CH₂)_{b}CO]_{d}-** (ii
*-[O(CH₂)_{b}CO]_{(d-1)}-[O(CHR¹²CHR¹³)ₐ]-** (iii)
in Formula (i) to Formula (iii), one of R¹² and R¹³ represents a hydrogen atom, and the other represents a hydrogen atom, a methyl group, or an ethyl group; a represents an integer of 1 or 2; b represents an integer of 4 or 5; d represents an integer from 1 to 20; * represents a binding site at which (i) to (iii) bind to a carbonyl carbon; and ** represents a binding site at which (i) to (iii) bind to Y¹ or Y².

6. The ink-jet ink composition according to any one of claims 1 to 5, further comprising isopropylthioxanthone.

7. The ink-jet ink composition according to any one of claims 1 to 6,
wherein a content of the Component B is 0.3% by mass to 5.0% by mass with respect to a total mass of the ink composition.

8. The ink-jet ink composition according to any one of claims 1 to 7,
wherein a mass ratio between a content of the Component B and a total content of the Component C ((Content of Component B):(Total content of Component C)) is 2:1 to 1:15.

9. The ink-jet ink composition according to any one of claims 1 to 8,
wherein a content of the Component A is equal to or greater than 80% by mass with respect to a total mass of the ink composition.

10. The ink-jet ink composition according to any one of claims 1 to 9 that is for package printing.

11. An inkjet recording method comprising:
(Step a) printing the ink-jet ink composition according to any one of claims 1 to 10 on a support for a package having a film thickness of equal to or smaller than 150 µm by ejecting the ink-jet ink composition from an inkjet head; and
(Step b) irradiating the ejected ink-jet ink composition with actinic rays, in this order.

12. A printed matter produced using the inkjet recording method according to claim 11.

## Patentansprüche

1. Tintenstrahl-Tintenzusammensetzung aufweisend:
(Komponente A) eine polyfunktionelle (Meth)acrylat-Verbindung;
(Komponente B) 1-[4-(4-Benzoylphenylsulfanyl)phenyl]-2-methyl-2-(4-methyl-phenylsulfonyl)propan-1-on; und
(Komponente C) eine Verbindung, die repräsentiert wird durch die folgende Formel (1) oder Formel (2),
wobei ein Gehalt an Polymerisationsinitiator mit einem Molekulargewicht von weniger als 340 gleich oder kleiner als 1,0 Masseprozent bezogen auf die Gesamtmenge der Tintenzusammensetzung ist; 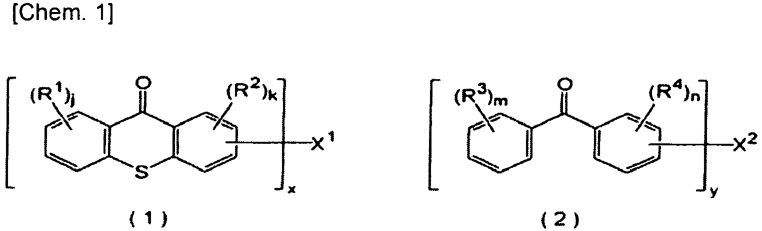 in Formel (1) und Formel (2), R¹, R², R³ und R⁴ jeweils unabhängig eine Alkylgruppe mit ein bis fünf Kohlenstoffatomen repräsentiert oder ein Halogenatom repräsentiert; x und y jeweils unabhängig eine ganze Zahl von 2 bis 4 repräsentiert; j und m jeweils unabhängig eine ganze Zahl von 0 bis 4 repräsentiert; k und n jeweils unabhängig eine ganze Zahl von 0 bis 3 repräsentiert; wenn j, k, m, und n eine ganze Zahl von gleich oder größer als 2 sind, mehrere der R¹, R², R³, und R⁴ gleich oder verschieden voneinander sein können; X¹ eine x-wertige Verbindungsgruppe, die eine Kohlenwasserstoffkette und/oder eine Etherbindung und/oder eine Esterbindung enthält, repräsentiert; und X² eine y-wertige Verbindungsgruppe, die eine Kohlenwasserstoffkette und/oder eine Etherbindung und/oder eine Esterbindung enthält, repräsentiert.

2. Tintenstrahl-Tintenzusammensetzung nach Anspruch 1 aufweisend:
die durch Formel (1) repräsentierte Verbindung; und
die durch Formel (2) repräsentierte Verbindung.

3. Tintenstrahl-Tintenzusammensetzung nach Anspruch 1 oder 2, wobei die Komponente A ein bifunktionelles Acrylat-Monomer umfasst.

4. Tintenstrahl-Tintenzusammensetzung nach Anspruch 3, aufweisend mindestens eine Art des bifunktionellen Acrylat-Monomers in einer Menge von 20 Masseprozent bis 80 Masseprozent bzgl. der Gesamtmenge der Tintenzusammensetzung.

5. Tintenstrahl-Tintenzusammensetzung nach einem der Ansprüche 1 bis 4,
wobei die durch Formel (1) repräsentierte Verbindung eine Verbindung ist, die durch Formel (1') repräsentiert wird, und die durch Formel (2) repräsentierte Verbindung eine durch Formel (2') repräsentierte Verbindung ist; 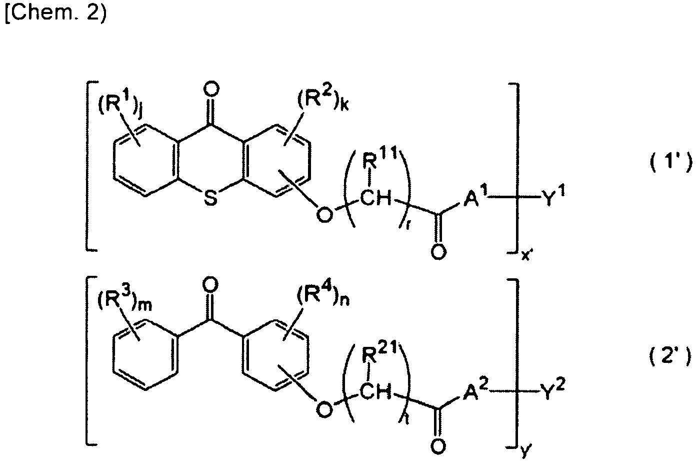 in Formel (1'), R¹, R², j und k jeweils dieselbe Definition wie R¹, R², j und k in Formel (1) haben; R" jeweils unabhängig ein Wasserstoffatom oder eine Alkylgruppe mit ein bis vier Kohlenstoffatomen repräsentiert; r jeweils unabhängig eine ganze Zahl von 1 bis 6 repräsentiert; x' eine ganze Zahl von 2 bis 4 repräsentiert; Y¹ einen Rest repräsentiert, der gebildet wird, wenn Wasserstoffatome von mindestens zwei Hydroxygruppen einer Polyhydroxyverbindung mit 2 bis 4 Hydroxygruppen entfernt werden; A¹ mindestens eine Gruppe repräsentiert, die ausgewählt ist aus einer Gruppe, die aus den folgenden (i) bis (iii) besteht; R³, R⁴, m und n in Formel (2') jeweils dieselbe Definition wie R³, R⁴, m und n in Formel (2) haben; R²¹ jeweils unabhängig ein Wasserstoffatom oder eine Alkylgruppe mit 1 bis 4 Kohlenstoffatomen repräsentiert; t jeweils unabhängig eine ganze Zahl von 1 bis 6 repräsentiert; y' eine ganze Zahl von 2 bis 4 repräsentiert; Y² einen Rest repräsentiert, der gebildet wird, wenn Wasserstoffatome von mindestens zwei Hydroxygruppen einer Polyhydroxyverbindung mit 2 bis 4 Hydroxygruppen entfernt werden; und A² mindestens eine Gruppe repräsentiert, die ausgewählt ist aus der Gruppe, die aus den folgenden (i) bis (iii) besteht,
[Chem. 3]
*-[O(CHR¹²CHR¹³)ₐ]_{d}-** (i)
*- [O(CH₂)_{b}CO]_{d} ** (ii)
*-[O(CH₂)_{b}CO]_{(d-1)}-[O(CHR¹²CHR¹³)ₐ]- ** (iii)
in Formel (i) bis Formel (iii) eine der Gruppen R¹² und R¹³ ein Wasserstoffatom repräsentiert und die andere ein Wasserstoffatom, eine Methylgruppe oder eine Ethylgruppe repräsentiert; a eine ganze Zahl von 1 oder 2 repräsentiert; b eine ganze Zahl von 4 oder 5 repräsentiert; d eine ganze Zahl von 1 bis 20 repräsentiert; * eine Bindungsstelle repräsentiert, an der (i) bis (iii) an einen Carbonyl-Kohlenstoff binden; und ** eine Bindungsstelle repräsentiert, an der (i) bis (iii) an Y¹ oder Y² binden.

6. Tintenstrahl-Tintenzusammensetzung nach einem der Ansprüche 1 bis 5, außerdem aufweisend Isopropylthioxanthon.

7. Tintenstrahl-Tintenzusammensetzung nach einem der Ansprüche 1 bis 6, wobei der Gehalt der Komponente B 0,3 Masseprozent bis 5,0 Masseprozent bezogen auf die Gesamtmasse der Tintenzusammensetzung beträgt.

8. Tintenstrahl-Tintenzusammensetzung nach einem der Ansprüche 1 bis 7, wobei ein Massenverhältnis zwischen dem Gehalt an der Komponente B und dem Gesamtgehalt an der Komponente C ((Gehalt an Komponente B): (Gesamtgehalt an Komponente C)) 2:1 bis 1:15 beträgt.

9. Tintenstrahl-Tintenzusammensetzung nach einem der Ansprüche 1 bis 8, wobei der Gehalt an der Komponente A gleich oder größer als 80 Masseprozent, bezogen auf die Gesamtmasse der Tintenzusammensetzung, ist.

10. Tintenstrahl-Tintenzusammensetzung nach einem der Ansprüche 1 bis 9, die zum Bedrucken von Verpackungen ist.

11. Tintenstrahl-Aufzeichnungsverfahren aufweisend:
(Schritt a) Drucken der Tintenstrahl-Tintenzusammensetzung nach einem der Ansprüche 1 bis 10 auf einen Träger für eine Verpackung mit einer Filmdicke von gleich 150 µm oder kleiner durch Ausstoßen der Tintenstrahl-Tintenzusammensetzung aus einem Tintenstrahlkopf; und
(Schritt b) Bestrahlen der ausgestoßenen Tintenstrahl-Tintenzusammensetzung mit aktinischen Strahlen, in dieser Reihenfolge.

12. Druckerzeugnis, hergestellt unter Verwendung des Tintenstrahl-Aufzeichnungsverfahrens nach Anspruch 11.

## Revendications

1. Composition d'encre pour jet d'encre, comprenant :
(composant A) un composé (méth)acrylate polyfunctional ;
(composant B) du 1-[4-(4-benzoylphénylsulfanyl)phényl]-2-méthyl-2-(4-méthylphénylsulfonyl)propan-1-one,
(composant C) un composé représenté par la Formule (1) ou Formule (2) suivante,
dans laquelle une teneur en initiateur de polymérisation présentant un poids moléculaire inférieur à 340 est inférieure ou égale à 1,0 % en masse par rapport à une quantité totale de la composition d'encre, 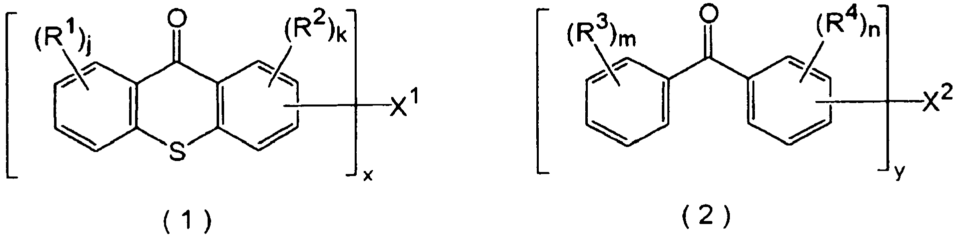 dans la Formule (1) et la Formule (2), chacun de R¹, R², R³ et R⁴ représente indépendamment un groupe alkyle présentant de 1 à 5 atomes de carbone, ou représente un atome d'halogène ; chacun de x et y représente indépendamment un entier de 2 à 4 ; chacun de j et m représente indépendamment un entier de 0 à 4 ; chacun de k et n représente indépendamment un entier de 0 à 3 ; lorsque j, k, m et n sont un entier supérieur ou égal à 2, plusieurs R¹, R², R³ et R⁴ peuvent être identiques ou différents entre eux ; X¹ représente un groupe de liaison x valent contenant au moins un élément parmi une chaîne hydrocarbonée, une liaison éther, et une liaison ester, et X² représente un groupe de liaison y valent contenant au moins un élément parmi une chaîne hydrocarbonée, une liaison éther, et une liaison ester.

2. Composition d'encre pour jet d'encre selon la revendication 1, comprenant :
le composé représenté par la Formule (1), et
le composé représenté par la Formule (2).

3. Composition d'encre pour jet d'encre selon la revendication 1 ou 2,
dans laquelle le composant A est un monomère acrylate bifonctionnel.

4. Composition d'encre pour jet d'encre selon la revendication 3, comprenant au moins un type du monomère acrylate bifonctionnel dans une quantité de 20 % en masse à 80 % en masse par rapport à une quantité totale de la composition d'encre.

5. Composition d'encre pour jet d'encre selon l'une quelconque des revendications 1 à 4,
dans laquelle le composé représenté par la Formule (1) est un composé représenté par la Formule (1'), et le composé représenté par la Formule (2) est un composé représenté par la Formule (2') ; 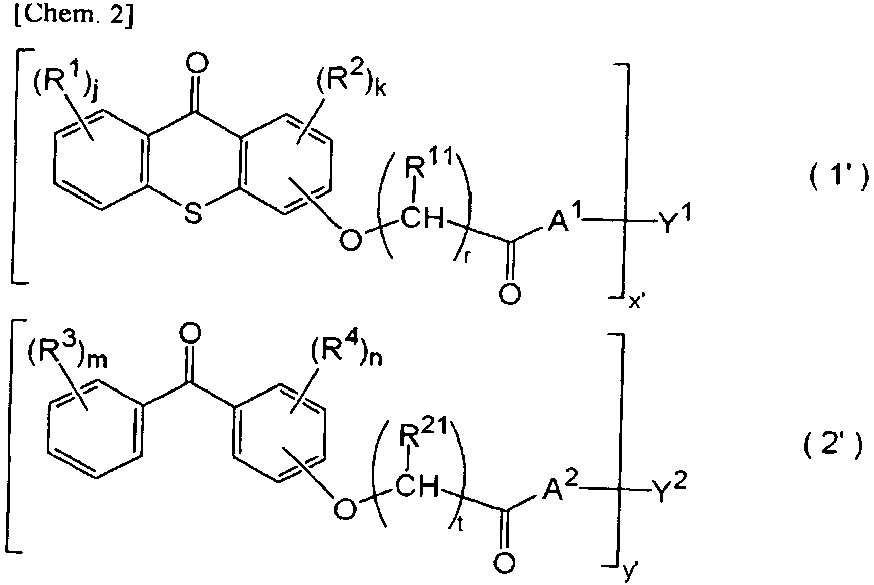 dans la Formule (1'), chacun de R¹, R², j et k présente respectivement la même définition que R¹, R², j et k dans la Formule (1) ; chaque R" représente indépendamment un groupe hydrogène ou un groupe alkyle présentant de 1 à 4 atomes de carbone ; chaque r représente indépendamment un entier de 1 à 6 ; x' représente un entier de 2 à 4 ; Y¹ représente un résidu formé lorsque des atomes d'hydrogène d'au moins deux groupes hydroxy sont retirés d'un composé polyhydroxy présentant de 2 à 4 groupes hydroxy ; A¹ représente au moins un groupe sélectionné parmi un groupe consistant en les éléments (i) à (iii) suivants ; R³, R⁴, m et n dans la Formule (2') présentent respectivement la même définition que R³, R⁴, m et n dans la Formule (2) ; chaque R²¹ représente indépendamment un groupe hydrogène ou un groupe alkyle présentant de 1 à 4 atomes de carbone ; chaque t représente indépendamment un entier de 1 à 6 ; y' représente un entier de 2 à 4 ; Y² représente un résidu formé lorsque des atomes d'hydrogène d'au moins deux groupes hydroxy sont retirés d'un composé polyhydroxy présentant de 2 à 4 groupes hydroxy, et A² représente au moins un groupe sélectionné parmi un groupe consistant en les éléments (i) à (iii) suivants :
[Chem. 3]
* -[O(CHR¹²CHR¹³)ₐ]_{d}-** (i)
* -[O(CH₂)_{b}CO]_{d}- ** (ii)
*-[O(CH₂)_{b}CO](_{d-1})-[O(CHR¹²CHR¹³)a]- ** (iii)
dans la Formule (i) à Formule (iii), un parmi R¹² et R¹³ représente un atome d'hydrogène, et l'autre représente un atome d'hydrogène, un groupe méthyle, ou un groupe éthyle ; a représente un entier de 1 ou 2 ; b représente un entier de 4 ou 5 ; d représente un entier de 1 à 20 ; * représente un site de liaison sur lequel au moins (i) à (iii) se lient à un carbone de carbonyle, et ** représente un site de liaison sur lequel (i) à (iii) se lient à Y¹ ou Y².

6. Composition d'encre pour jet d'encre selon l'une quelconque des revendications 1 à 5, comprenant en outre de l'isopropylthioxanthone.

7. Composition d'encre pour jet d'encre selon l'une quelconque des revendications 1 à 6, dans laquelle une teneur du composant B est de 0,3 % en masse à 5,0 % en masse par rapport à une quantité totale de la composition d'encre.

8. Composition d'encre pour jet d'encre selon l'une quelconque des revendications 1 à 7, dans laquelle un rapport de masse entre une teneur du composant B et une teneur totale du composant C ((teneur de composant B) : (teneur totale du composant C)) est de 2 : 1 à 1 : 15.

9. Composition d'encre pour jet d'encre selon l'une quelconque des revendications 1 à 8, dans laquelle une teneur du composant A est supérieure ou égale à 80% en masse par rapport à une masse totale de la composition d'encre.

10. Composition d'encre pour jet d'encre selon l'une quelconque des revendications 1 à 9, destinée à l'impression d'emballage.

11. Procédé d'enregistrement à jet d'encre,
(étape a) l'impression de la composition d'encre pour jet d'encre selon l'une quelconque des revendications 1 à 10 sur un support pour un emballage présentant une épaisseur de film inférieure ou égale à 150 µm en éjectant la composition d'encre à partir d'une tête à jet d'encre, et
(étape b) l'irradiation de la composition d'encre pour jet d'encre avec des rayons actiniques, dans cet ordre.

12. Elément imprimé utilisant la composition d'encre pour jet d'encre selon la revendication 11.
